Europäisches Patentamt

European Patent Office

Office européen des brevets

(19)

(11)   EP 0 736 196 B1

(12)   EUROPEAN PATENT SPECIFICATION

(45) Date of publication and mention
of the grant of the patent:
**17.07.2002   Bulletin 2002/29**

(51) Int Cl.[7]: **G02F 1/1335**

(86) International application number:
**PCT/US94/14325**

(21) Application number: **95905914.8**

(22) Date of filing: **20.12.1994**

(87) International publication number:
**WO 95/17699 (29.06.1995 Gazette 1995/27)**

(54) **REFLECTIVE POLARIZER DISPLAY**

ANZEIGE MIT REFLEKTIVEM POLARISATOR

AFFICHAGE A POLARISEUR REFLECTIF

(84) Designated Contracting States:
**DE FR GB IT NL**

(30) Priority:  **21.12.1993  US 172596**

(43) Date of publication of application:
**09.10.1996   Bulletin 1996/41**

(73) Proprietor: **MINNESOTA MINING AND
MANUFACTURING COMPANY
St. Paul, Minnesota 55133-3427 (US)**

(72) Inventors:
• **OUDERKIRK, Andrew, J.**
  **Saint Paul, MN 55133-3427 (US)**
• **WEBER, Michael, F.**
  **Saint Paul, MN 55133-3427 (US)**
• **JONZA, James, M.**
  **Saint Paul, MN 55133-3427 (US)**
• **STOVER, Carl, A.**
  **Saint Paul, MN 55133-3427 (US)**

• **COBB, Sanford, Jr.**
  **Saint Paul, MN 55133-3427 (US)**
• **WORTMAN, David, L.**
  **Saint Paul, MN 55133-3427 (US)**
• **BENSON, Olester, Jr.**
  **Saint Paul, MN 55133-3427 (US)**

(74) Representative: **VOSSIUS & PARTNER
Postfach 86 07 67
81634 München (DE)**

(56) References cited:
**EP-A- 0 492 636            EP-A- 0 573 905
WO-A-94/11776            WO-A-94/29765**

• **IBM TECHNICAL DISCLOSURE BULLETIN, vol.
33,no. 1B, June 1990 NEW YORK, US, pages
143-144, 'Polarized Backlight for Liquid Crystal
Display.'**
• **PATENT ABSTRACTS OF JAPAN vol. 12 no. 439
(P-788) [3286] ,18 November 1988 & JP,A,63
168626 (CITIZEN WATCH) 12 July 1988,**

**Description**

**Technical Field**

The invention is an improved optical display.

**Background**

Optical displays are widely used for lap-top computers, hand-held calculators, digital watches and the like. The familiar liquid crystal (LC) display is a common example of such an optical display. The conventional LC display locates a liquid crystal and an electrode matrix between a pair of absorptive polarizers. In the LC display, portions of the liquid crystal have their optical state altered by the application of an electric field. This process generates the contrast necessary to display "pixels" of information in polarized light.

For this reason the traditional LC display includes a front polarizer and a rear polarizer. Typically, these polarizers use dichroic dyes which absorb light of one polarization orientation more strongly than the orthogonal polarization orientation. In general, the transmission axis of the front polarizer is "crossed" with the transmission axis of the rear polarizer. The crossing angle can vary from zero degrees to ninety degrees. The liquid crystal, the front polarizer and rear polarizer together make up an LCD assembly.

LC displays can be classified based upon the source of illumination. "Reflective" displays are illuminated by ambient light that enters the display from the "front." Typically a brushed aluminum reflector is placed "behind" the LCD assembly. This reflective surface returns light to the LCD assembly while preserving the polarization orientation of the light incident on the reflective surface.

It is common to substitute a "backlight" assembly for the reflective brushed aluminum surface in applications where the intensity of the ambient light is insufficient for viewing. The typical backlight assembly includes an optical cavity and a lamp or other structure that generates light. Displays intended to be viewed under both ambient light and backlit conditions are called "transflective." One problem with transflective displays is that the typical backlight is not as efficient a reflector as the traditional brushed aluminum surface. Also the backlight randomizes the polarization of the light and further reduces the amount of light available to illuminate the LC display. Consequently, the addition of the backlight to the LC display makes the display less bright when viewed under ambient light.

Therefore, there is a need for a display which can develop adequate brightness and contrast under both ambient and backlight illumination.

EP-A- 0573 905 discloses a retroreflecting polarizer for presentation systems and relates to liquid crystal display panels for an overhead projector utilizing a thin, retroreflecting polarizer.

**Summary**

The optical display of the present invention is defined in claim 1 and further specified in dependent claims 2-45 and comprises three basic elements. The first element is a reflective polarizer. This reflective polarizer is located between a liquid crystal display (LCD) assembly and an optical cavity, which comprise the second and third elements respectively.

**Brief Description of the Drawings**

The drawings depict representative and illustrative implementations of the invention. Identical reference numerals refer to identical structure throughout the several figures, wherein:

Figure 1 is a schematic cross section of an optical display according to the invention;
Figure 2 is a schematic cross section of an illustrative optical display according to the invention;
Figure 3 is a schematic cross section of an illustrative optical display according to the invention;
Figure 4 is an exaggerated cross sectional view used in the reflective polarizer of the invention;
Figure 5 is a graph of the reflective polarizer performance;
Figure 6 is a schematic diagram of an optical display according to the invention with brightness enhancement;
Figure 7 is a diagram illustrating the operation of a brightness enhancer;
Figure 8 is a graph illustrating the operation of a brightness enhancer;
Figure 9 is a schematic cross section of an illustrative optical display;
Figure 10 is a schematic cross section of an illustrative optical display;
Figure 11 is a schematic cross section of an illustrative optical display;
Figure 12 is a graph of test results;

Figure 13 is a schematic cross section of an illustrative optical display;

Figure 14 is a schematic cross section of a brightness enhanced reflective polarizer;

Figure 15 shows a two layer stack of films forming a single interface.

Figures 16 and 17 show reflectivity versus angle curves for a uniaxial birefringent system in a medium of index 1.60.

Figure 18 shows reflectivity versus angle curves for a uniaxial birefringent system in a medium of index 1.0.

Figures 19, 20 and 21 show various relationships between in-plane indices and z-index for a uniaxial birefringent system.

Figure 22 shows off axis reflectivity versus wavelength for two different uniaxial birefringent systems.

Figure 23 shows the effect of introducing a y-index difference in a biaxial birefringent film.

Figure 24 shows the effect of introducing a z-index difference in a biaxial birefringent film.

Figure 25 shows a contour plot summarizing the information from Figures 18 and 19;

Figures 26-31 show optical performance of multilayer mirrors given in the mirror Examples; and

Figures 32-35 show optical performance of multilayer polarizers given in the polarizer Examples.

## Detailed Description

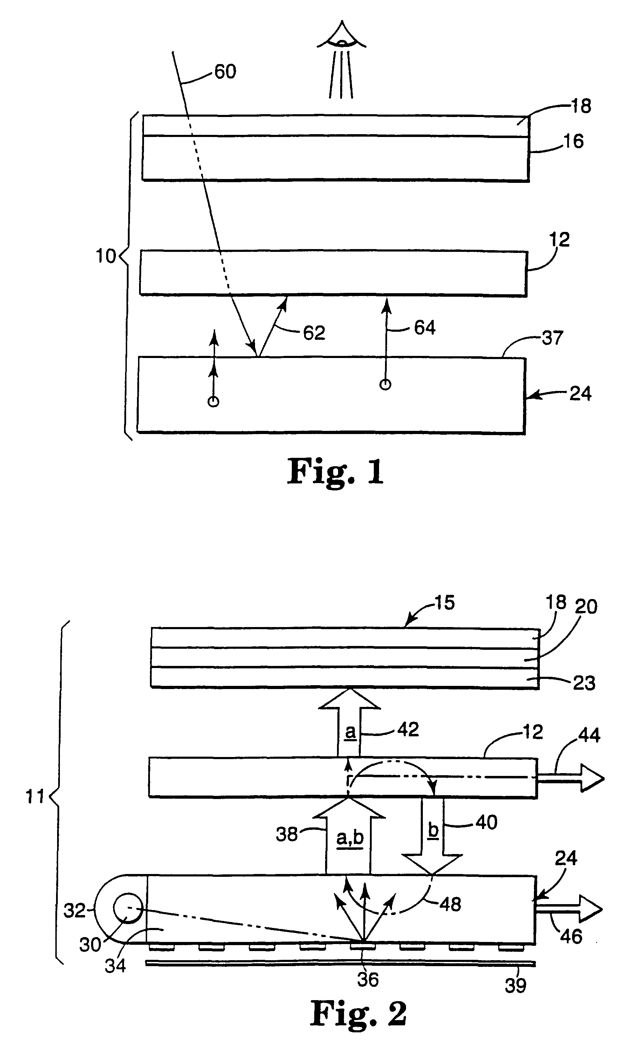

Figure 1 is a schematic diagram of an illustrative optical display 10 that includes three principle components. These include the polarizing display module shown as LCD assembly 16, a reflective polarizer 12, and an optical cavity 24.

The LCD assembly 16 shown in this figure is illuminated by polarized light provided by the reflective polarizer 12 and the optical cavity 24.

Ambient light incident on the display 10, depicted by ray 60 traverses the LCD module 16, the reflective polarizer 12 and strikes the diffuse reflective surface 37 of the optical cavity 24. Ray 62 depicts this light as it is reflected by the diffusely reflective surface 37 toward the reflective polarizer 12.

Light originating from within the optical cavity 24 is depicted by ray 64. This light is also directed toward the reflective polarizer 12 and passes through the diffusely reflective surface 37. Both ray 62 and ray 64 have light exhibiting both polarization states (a,b).

Figure 2 shows a schematic optical display 11 illustrated with a three layer LCD assembly 15 that includes a front polarizer 18, a liquid crystal 20 and a rear polarizer 23. In this embodiment the optical cavity 24 is an edge lit backlight which includes a lamp 30 in a reflective lamp housing 32. Light from the lamp 30 is coupled to the light guide 34 where it propagates until it encounters a diffuse reflective structure such as spot 36. This discontinuous array of spots is arranged to extract lamp light and direct it toward the LCD module 15. Ambient light entering the optical cavity 24 may strike a spot or it may escape from the light guide through the interstitial areas between spots. The diffusely reflective layer 39 is positioned below the light guide 34 to intercept and reflect such rays. In general, all the rays that emerge from the optical cavity 24 are illustrated by ray bundle 38. This ray bundle is incident on the reflective polarizer 12 which transmits light having a first polarization orientation referred to as "(a)" and effectively reflects light having the orthogonal polarization orientation (b). Consequently, a certain amount of light, depicted by ray bundle 42, will be transmitted by the reflective polarizer 12 while a substantial amount of the remaining light will be reflected as indicated by ray bundle 40. The preferred reflective polarizer material is highly efficient and the total losses due to absorption within the reflective polarizer 12 are very low (on the order of 1 percent). This lost light is depicted by ray bundle 44. The light having polarization state (b) reflected by the reflective polarizer 12 reenters the optical cavity 24 where it strikes the diffusely reflective structures such as spot 36 or the diffusely reflective layer 39. The diffusely reflective surfaces serve to randomize the polarization state of the light reflected by the optical cavity 24. This recirculation and randomization process is depicted as path 48. The optical cavity 24 is not a perfect reflector and the light losses in the cavity due to scattering and absorption are depicted by ray bundle 46. These losses are also low (on the order of 20 percent). The multiple recirculations effected by the combination of the optical cavity 24 and the reflective polarizer 12 form an efficient mechanism for converting light from state (b) to state (a) for ultimate transmission to the viewer.

The effectiveness of this process relies on the low absorption exhibited by the reflective polarizer disclosed herein and the high reflectivity and randomizing properties exhibited by many diffusely reflective surfaces. In Figure 2 both the discontinuous layer depicted by spot 36 and the diffusely reflective continuous layer 39 may be formed of a titanium oxide pigmented material. It should be appreciated that a diffuse reflective surface 37 (shown in Figure 1) can be formed of transparent surface textured polycarbonate. This material could be placed above the light guide 34 to randomize incident light in the configuration shown in Figure 2. The specific and optimal configuration will depend on the particular application for the completed optical display.

In general, the gain of the system is dependent on the efficiency of both the reflective polarizer body 12 and the optical cavity 24. Performance is maximized with a highly reflective optical cavity 24 consistent with the requirement of randomization of the polarization of incident light, and a very low loss reflective polarizer 12.

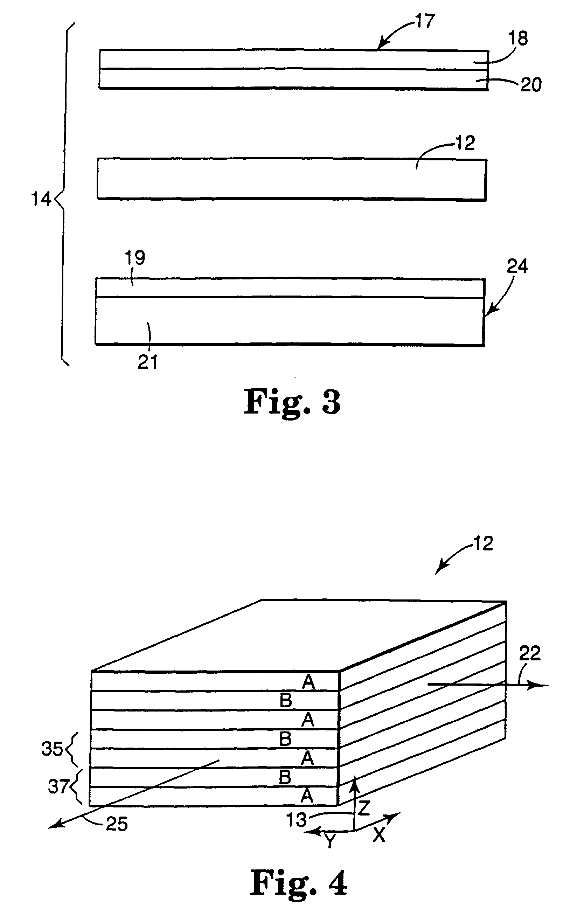

Figure 3 shows a schematic optical display 14 illustrated with a two layer LCD assembly 17 that includes a front polarizer 18 and a liquid crystal 20. In this embodiment the optical cavity 24 includes an electroluminescent panel 21. The traditional electroluminescent panel 21 is coated with a phosphor material 19 that generates light when struck by electrons and that is also diffusely reflective when struck by incident light. Usually, electroluminescent displays are "grainy" because of the variations in efficiencies associated with the phosphor coating. However, light returned by the reflective polarizer 12 has a tendency to "homogenize" the light emissions and improve overall uniformity of illumination exhibited by the optical display 14. In the illustrative optical display 14 the LCD assembly 17 lacks a rear polarizer. In this optical display 14 the reflective polarizer 12 performs the function normally associated with the rear polarizer 23 shown in optical display 11 in Figure 2.

Figure 4 is a schematic perspective diagram of a segment of the reflective polarizer 12. The figure includes a coordinate system 13 that defines X, Y and Z directions that are referred to in the description of the reflective polarizer 12.

The illustrative reflective polarizer 12 is made of alternating layers (ABABA...) of two different polymeric materials. These are referred to as material "(A)" and material "(B)" throughout the drawings and description. The two materials are extruded together and the resulting multiple layer (ABABA...) material is stretched (5:1) along one axis (X), and is not stretched appreciably (1:1) along the other axis (Y). The X axis is referred to as the "stretched" direction while the Y axis is referred to as the "transverse" direction.

The (B) material has a nominal index of refraction (n=1.64 for example) which is not substantially altered by the stretching process.

The (A) material has the property of having the index of refraction altered by the stretching process. For example, a uniaxially stretched sheet of the (A) material will have one index of refraction (n=1.88 for example) associated with the stretched direction and a different index of refraction (n=1.64 for example) associated with the transverse direction. By way of definition, the index of refraction associated with an in-plane axis (an axis parallel to the surface of the film) is the effective index of refraction for plane-polarized incident light whose plane of polarization is parallel to that axis.

Thus, after stretching the multiple layer stack (ABABA...) of material shows a large refractive index difference between layers (delta n=1.88-1.64=0.24) associated with the stretched direction. While in the transverse direction, the associated indices of refraction between layers are essentially the same (delta n=1.64-1.64=0.0). These optical characteristics cause the multiple layer laminate to act as a reflecting polarizer that will transmit the polarization component of the incident light that is correctly oriented with respect to the axis 22. This axis is defined as the transmission axis 22 and is shown in Figure 4. The light which emerges from the reflective polarizer 12 is referred to as having a first polarization orientation (a).

The light that does not pass through the reflective polarizer 12 has a polarization orientation (b) that differs from the first orientation (a). Light exhibiting this polarization orientation (b) will encounter the index differences which result in reflection of this light. This defines a so-called "extinction" axis shown as axis 25 in Figure 4. In this fashion the reflective polarizer 12 passes light having a selected polarization (a).

Example

The preferred "A" layer is a crystalline naphthalene dicarboxylic acid polyester such as polyethylene naphthalate (PEN), and the preferred "B" layer is a copolyester of naphthalene dicarboxylic acid and terephthalic or isothalic acid (coPEN). PEN and a 70 naphthalate/30 terephthalate copolyester (coPEN) can be synthesized in standard polyester resin kettles using glycol as the diol. A satisfactory 204-layered polarizer was made by extruding PEN and coPEN in a 51-slot feed block and then employing two layer doubling multipliers in series in the extrusion. The multipliers divide the extruded material exiting the feed block into two half-width flow streams, then stack the half-width flow streams on top of each other. Such multipliers are known in the art. The extrusion was performed at approximately 295°C. The PEN exhibited an intrinsic viscosity of 0.50 dl/g and the coPEN exhibited an intrinsic viscosity of 0.60 dl/g. The extrusion rate for the PEN material was 22.5 lb/hr and the extrusion rate for the coPEN was 16.5 lb/hr. The cast web was approximately 0.0038 inches in thickness and was uniaxially stretched at a 5:1 ratio in a longitudinal direction with the sides restrained at an air temperature of 140°C during stretching. Except for exterior skin layers, all layer pairs were designed to be 1/2 wavelength optical thickness for a design wavelength of 550 nm.

Two 204-layer polarizers made as described above were then hand-laminated using an adhesive. Preferably the refractive index of the adhesive should match the index of the isotropic coPEN layer.

The optical performance of the reflective polarizer 12 depends in part on the optical thicknesses of the various layers. Both thick film and thin film constructions are useful. If the layers exhibit optical paths that are many wavelengths of light long, then the optical properties of the reflective polarizer 12 are inherently broadband. If the layers have an optical thickness less than a wavelength of light, then constructive interference can be exploited to improve the optical performance of the reflective polarizer 12 of selected wavelengths.

The manufacturing procedure described in the example can produce uniform layers that have an optical thickness that is less than the wavelength of light over the visible spectrum. Constructive interference occurs if the optical thickness of pairs of layers (A,B) add to one half of the wavelength of the incident light (A+B=lambda/2). This half wavelength condition results in narrow band constructive interference at the design wavelength. Broadband optical performance can be achieved by laminating or otherwise coupling multiple narrow band stacks. For example, a first group 37 of layers having the same thickness (A+B=lambda/2) can be laminated to a second group 35 having a different thickness (A+B=lambda prime/2). For the sake of clarity only a small number of layers are shown in Figure 4, although typically hundreds of layers (ABAB...) may be stacked together to achieve efficient broadband response. Preferably the reflective polarizer 12 should be designed to reflect light at all angles and wavelengths of interest.

Although the reflective polarizer 12 has been discussed with an exemplary multiple layer construction which includes alternating layers of only two materials it should be understood that the reflective polarizer 12 may take a number of forms. For example, additional types of layers may be included into the multiple layer construction. Also in a limiting case, the reflective polarizer may include a single pair of layers (AB) one of which is stretched. Furthermore, a dichroic polarizer could be bonded directly to reflective polarizer 12.

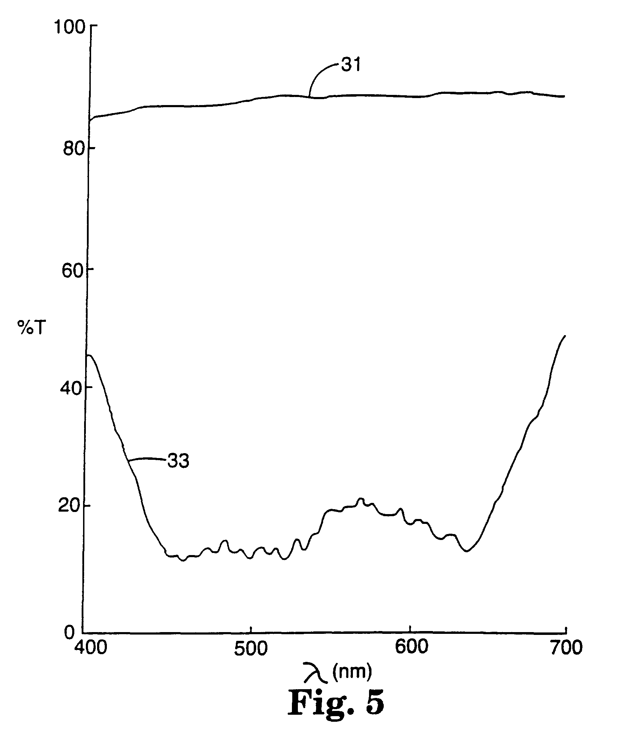

Another important property of the optical cavity 24 is the fact that polarization randomization process associated with the cavity will also alter the direction of the incident light. In general, a significant amount of light exits the optical cavity off-axis. Consequently, the path of such light in the reflective polarizer is longer than the path length for near normal light. This effect must be addressed to optimize the optical performance of the system. The reflective polarizer body 12 described in the example is capable of broadband transmission into the longer wavelengths which is desirable to accommodate off-axis rays. Figure 5 shows trace 31 which indicates a transmissivity of over 80 percent over a wide range of wavelengths. Trace 33 shows efficient broadband reflectively over a large portion of the visible spectrum. The optimal reflectivity trace would extend into the infrared and extend from approximately 400nm to approximately 800nm.

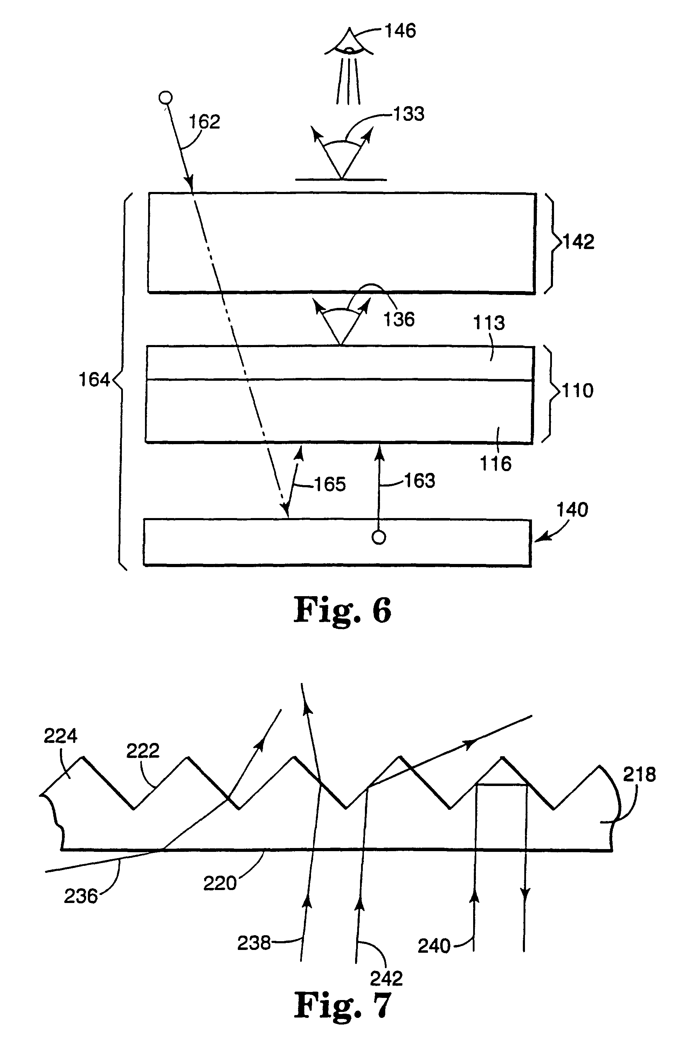

In another embodiment, the apparent brightness of the display may be increased by the use of a brightness enhancement film. Figure 6 shows an optical display 164 which has three primary components. These are the optical display module 142, the brightness enhanced reflective polarizer 110 and the optical cavity 140. Typically the complete optical display 164 will be planar and rectangular in plan view as seen by observer 146 and will be relatively thin in cross section with the three primary components in close proximity to each other.

In use, the display module 142 is illuminated by light processed by the brightness enhanced reflective polarizer 110 and the optical cavity 140. Together these two components direct polarized light into a viewing zone 136 shown schematically as an angle. This light is directed through the display module 142 toward the observer 146. The display module 142 will typically display information as pixels. Polarized light transmission through a pixel is modulated by electrical control of the birefringence of the liquid crystal material. This modulates the polarization state of the light, affecting its relative absorption by a second polarizer layer that forms a part of the display module 142.

There are two sources for illumination shown in the figure. The first is ambient light depicted by ray 162. This light passes through the display module 142 and brightness enhanced reflective polarizer 110 and is incident on the optical cavity 140. The optical cavity reflects this light as indicated by ray 165. The second source of light may be generated within the optical cavity itself as depicted by ray 163. If the optical cavity 140 is a backlight then the principal source of illumination originates within the optical cavity 140 and the optical display is referred to as "backlit." If the principal source of illumination is ambient light represented by ray 162 and ray 165 then the optical display is called "reflective" or "passive." If the display is to be viewed under both ambient and cavity generated light the display is called "transflective." The present invention is useful in each of these display types.

Regardless of the origin of the light, the brightness enhanced reflective polarizer 110 and the optical cavity 140 cooperate together to "recirculate" light so that the maximum amount of light is properly polarized and confined to the viewing zone 136.

In general, the brightness enhanced reflective polarizer 110 includes two elements. The first is a reflective polarizer body 116 that transmits light of a particular polarization to the viewing zone 136. The second element is the optically structured layer 113 that defines the boundaries of the viewing zone 136.

The optical cavity 140 serves several functions but with respect to its interaction with the brightness enhanced reflective polarizer 110, the important parameters are a high reflectance value with respect to incident light and the ability of the optical cavity 40 to alter both the direction and the polarization of the incident light. Conventional optical cavities meet these requirements.

For any optical system, the sum of the reflectivity, losses and transmissivity must equal 100 percent of the light. Absorbance can be a major source of such losses. In the present invention the brightness enhanced reflective polarizer 110 has a very low absorbance and high reflectivity to certain light. Consequently light that is not passed directly into the viewing zone 136 is efficiently transferred to the optical cavity 140 where it is altered and may emerge from the cavity with the proper attributes to contribute to the light in the viewing zone 136.

In the context of the optical display 164 the overall gain of the system depends on the product of the reflectivity of the optical cavity 140 and the reflectivity of the brightness enhanced reflective polarizer 110. The invention is most effective when used with a low absorption optical cavity that has a high reflectivity rear surface consistent with its ability to alter the direction and polarization state of the incident light from the brightness enhanced reflective polarizer 110. For these purposes it should be noted that the optical cavity could be filled with a transparent dielectric material such as an acrylic.

Although the preferred structured surface 112 functions as a geometric optic it is well known that diffractive or holographic optical elements may be designed to effectively mimic the light directing qualities exhibited by geometric optics. Therefore the term structured surface 112 should be understood to describe both geometric and diffractive optical systems that confine light to a relatively narrow viewing zone 136.

Figure 7 is an enlargement of structured surface material that will act as a brightness enhancer in the present invention. As described previously, structured surface material 218 has a smooth side 220 and a structured side 222. Structured side 222, in the preferred embodiment, includes a plurality of triangular prisms. In the preferred embodiment, such prisms are right isosceles prisms, although prisms having peak angles in the range of 70 degrees to 110 degrees will work with varying degrees of effectiveness with the invention. Structured surface material 218 may be of any transparent material having an index of refraction greater than that of air, but, in general, the materials with higher indices of refraction will produce better results. Polycarbonate, which has an index of refraction of 1.586, has proven to work very effectively. For purposes of description of the invention, the prisms on structured surface 222 will be assumed to have included angles of 90 degrees and structured surface material 218 will be assumed to be of polycarbonate. Alternatively other structured surface materials may be used. Symmetric cube comer sheeting has been shown to produce excellent results.

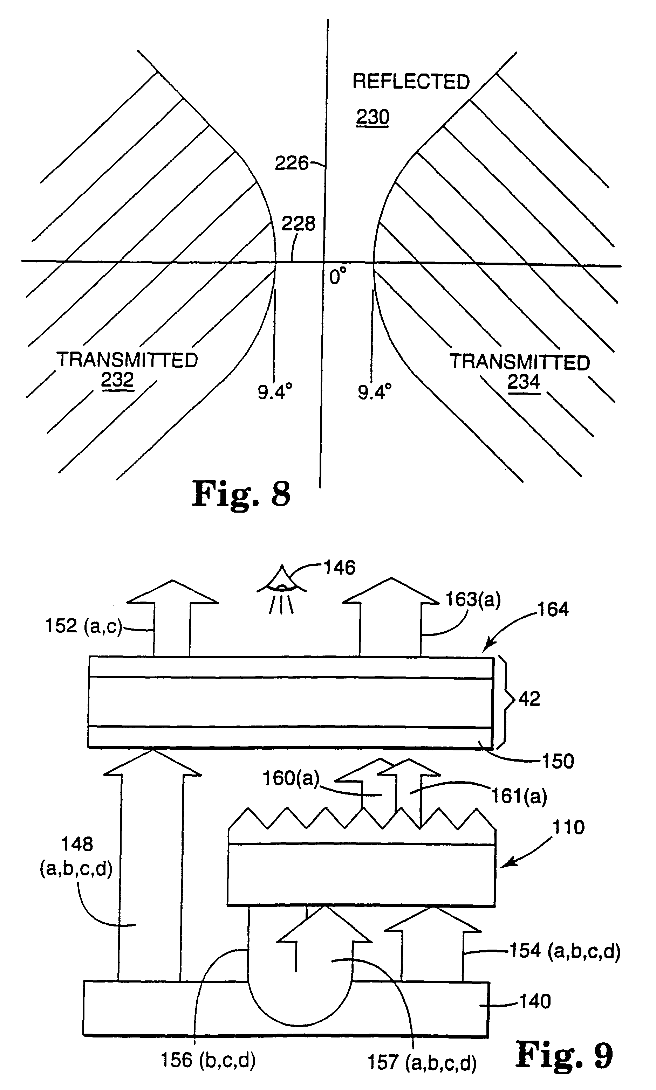

Figure 8 illustrates the operation of structured surface material 218. Figure 8 is a graph having two axes 226 and 228. These axes represent the angle that a light ray makes to a normal to smooth surface 220. Specifically, axis 226 represents the angle that the light ray makes when the direction of the light ray is projected into a plane parallel to the linear extent of the structures on structured surface 222. Similarly axis 228 represents the angle that the light ray makes to a normal to smooth surface 220 when the direction of the light ray is projected into a plane perpendicular to the linear extent of the structures on structured surface 222. Thus a light ray striking perpendicular to smooth surface 220 would be represented by the origin, labeled 0 degrees, of the graph of Figure 8. As may be seen, Figure 8 is divided into regions 230, 232, and 234. Light striking at angles that fall within region 230 will enter structured surface material 218 but be totally internally reflected by structured surface 222 so that they pass through smooth surface 220 a second time and reenter the optical cavity. Light rays striking smooth surface 220 at an angle such that they fall in region 232 or 234 will be transmitted but refracted to a different angle with respect to the normal. As may be seen from Figure 8, which represents the performance of polycarbonate, any light ray striking smooth surface 220 at an angle of less than 9.4 degrees to the normal, will be reflected.

Returning to Figure 7, four exemplary light rays are shown. The first, light ray 236, approaches smooth surface 220 at a grazing angle, i.e., an angle to the normal approaching 90 degrees. If light ray 236 makes an angle of 89.9 degrees to the normal to surface 220 when it strikes structured surface material 218, it will be refracted such that it makes an angle of 39.1 degrees to the normal as it travels through structured surface material 218. Upon reaching structured surface 222, it will be refracted again. Because of the structures on structured surface 222, it will be refracted so that again it will make a smaller angle to the normal to structured surface 220. In the example it will make an angle of 35.6 degrees.

Light ray 238 approaches smooth surface 220 at an angle much closer to the cut off angle. It also is refracted as it passes through smooth surface 220, but to a lesser extent. If light ray 238 approaches smooth surface 220 at an angle of 10 degrees to the normal to smooth surface 220, it will emerge from structured surface 222 at an angle of 37.7 degrees to the normal to smooth surface 220 but on the opposite side of that normal.

Light ray 240 approaches at an angle less than the cut off angle and is totally internally reflected twice by structured surface 222 and returned to the interior of the optical cavity.

Finally, light ray 242 approaches smooth surface 220 at an angle similar to that of light ray 238, but in a location such that it is totally internally reflected by one side of a prism on structured surface 222 but not by the second side. As a result it emerges at a large angle to the normal to smooth surface 220. Because such a reflection only occurs to a light ray that is travelling in a direction that forms a high incidence angle to the side it strikes, the prisms provide a very small cross section to such rays. In addition many of those rays will reenter the next prism and be returned into display 210.

A fifth class of light ray is not shown in Figure 7. This is the set of light rays that are reflected by smooth surface 220 and do not enter structured surface material 218. Such light rays simply join the others that are reflected back into the optical cavity. As may be seen from this discussion, light that, absent structured surface material 218, would have emerged from the display at a high angle to the axis of the display, where the axis of the display is taken to be the normal to smooth surface 220, is redirected into a direction closer to that axis. A small amount of light will be directed out at a large angle to the axis. Thus, we may say that light that enters structured surface material 218 through smooth surface 220 with an angle of incidence greater than a predetermined angle is directed into an output wedge that is narrower than the input wedge and the majority of the light that enters structured surface material 218 through smooth surface 220 at an angle of incidence of less than that predetermined angle will be reflected back into the optical cavity.

The light that is reflected back into the optical cavity will strike the diffuse reflector. The reflected light will travel back to structured surface material 218, in general making a different angle than it made the first time. The process is then repeated so that more of the light is redirected into the smaller wedge. The key aspect of the invention is that structured surface material 218 must be capable of reflecting light striking it in a first predetermined group of angles and passing, but refracting, light striking it in a second predetermined group of angles wherein the angles in the second group of angles are greater than those in the first group of angles and wherein the light in the second group of angles is refracted into an output wedge that is narrower than its input wedge. In this description the first and second groups of angles are relative to an axis of the display perpendicular to the display surface, i.e. the liquid crystal.

Figure 9 shows a portion of the schematic optical display 164 without the brightness enhanced reflective polarizer 110 material to permit a comparison of performance without the brightness enhanced reflective polarizer 110. In general, the light emerging from a unit area of the optical cavity 140 depicted by ray bundle 148 will be randomly polarized and have optical states (a), (b), (c), and (d) present. Approximately half of this light, light of states (b) and (d), are absorbed by the dichroic absorptive polarizer 150 that forms a part of the display module 142. The remainder of the light, states (a) and (c), are passed through the dichroic absorptive polarizer 150. The light emerging from the display module 142, depicted by ray bundle 152, thus contains light of states (a) and (c). Although the light of state (a) is directed toward the observer 146, the light of state (c) is not. The remainder of the light having states (b) and (d) will be absorbed by the dichroic absorptive polarizer 150. Thus, only approximately one quarter of the light provided by optical cavity 140 actually contributes to the brightness of the display as viewed by observer 146.

The brightness enhancer operates to make more efficient use of the light made available by optical cavity 140. If the same unit amount of light, depicted by ray bundle 154, is directed to the brightness enhanced reflective polarizer 110, approximately a quarter of the light (light of state (a)) will pass through the brightness enhanced reflective polarizer 110 on the first pass. This light will have the correct polarization to match the transmission axis of the dichroic absorptive polarizer 150, and is depicted as ray bundle 161. However the remaining light having states (b), (c), and (d) will be reflected back into the optical cavity by the brightness enhanced reflective polarizer 110. Some portion of this light will be randomized in terms of direction and polarization to state (a) by the optical cavity 140. Thus, this light will emerge from the optical cavity with states (a), (b), (c), and (d) as indicted by ray bundle 157. The recirculated light of state (a) will then be added to the originally transmitted light as depicted by ray bundle 160. Thus, the total amount of light depicted by ray bundle 160 and ray bundle 161 is increased by "recirculation." Because only light of the correct polarization to match the transmission axis of the dichroic absorptive polarizer 150 (state (a)) is passed through the brightness enhanced reflective polarizer 110, much more of the light emitted from the display, depicted by ray bundle 63, is directed toward the observer 146. In addition, because light of states (b) and (d) is reflected by the brightness enhanced reflective polarizer 110, very little is absorbed by the dichroic absorptive polarizer 150. The result is a display in which the amount of light emerging from the display, depicted by ray bundle 163, may be 70 percent brighter than the amount of light indicated by ray bundle 152.

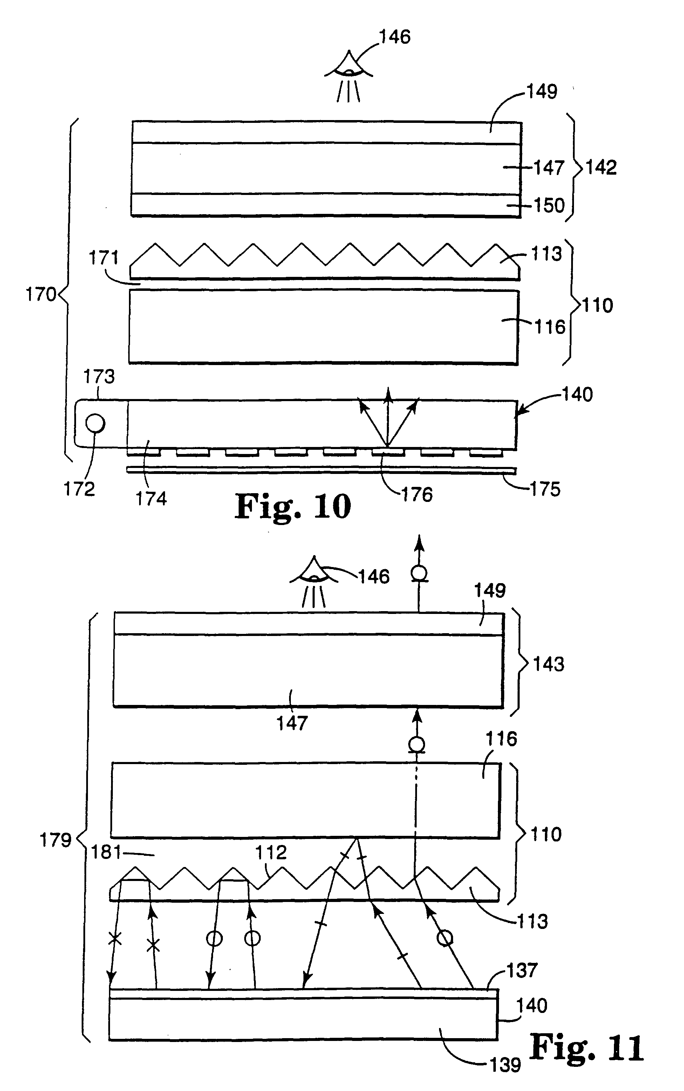

Figure 10 shows an optical display 170. The optical display module 142 includes a liquid crystal matrix 147 placed between a front polarizer 149 and a rear polarizer 150. In this embodiment the optically structured layer 113 is separated from the reflective polarizer body 116 by gap 171. The gap 171 introduces reflections for state (a) light rays which are not desirable. In the display 170 the optical cavity 140 is a backlight which includes a lamp 172 within a lamp reflector 173. Light from the lamp 172 enters the light guide 174 and travels until it strikes a diffuse reflective surface such as spot 176. Although a discontinuous array of such spots is required to effectively extract light from the light guide 174, the intermittent surface may not be sufficient to fully recirculate light. Therefore it is preferred to place a continuous diffuse reflective surface 175 below the discontinuous surface to aid in the recirculation process.

Figure 11 shows an optical display 179 where the optically structured layer 113 and structured surface 112 is a separate element proximate but not directly applied to the reflective polarizer body 116. Together these two components along with the gap 181 make up the brightness enhanced reflective polarizer 110. In use, the optical cavity 140 will provide light for the display and will also act to reorient the polarization and direction of light returned from the brightness enhanced reflective polarizer 110. The optical cavity 140 includes an electroluminescent panel 139 having a phosphor coating which acts as a diffuse reflective surface 137. One difference between this embodiment of the brightness enhanced reflective polarizer 110 and that of Figure 10 is that light approaching the structured surface 112 at an angle greater than the critical angle 134 is returned to the optical cavity by total internal reflection regardless of its state of polarization. Another difference is that the light transmitted by optically structured layer 113 passes through the reflective polarizer body 116 at near normal angles. A further difference relates to the presence of a front polarizer 149 and the absence of a rear polarizer in the display module 143. In embodiments where the backlight is the dominant source of light, adequate contrast can be achieved without the use of an absorptive polarizer juxtaposed next to the brightness enhanced reflective polarizer.

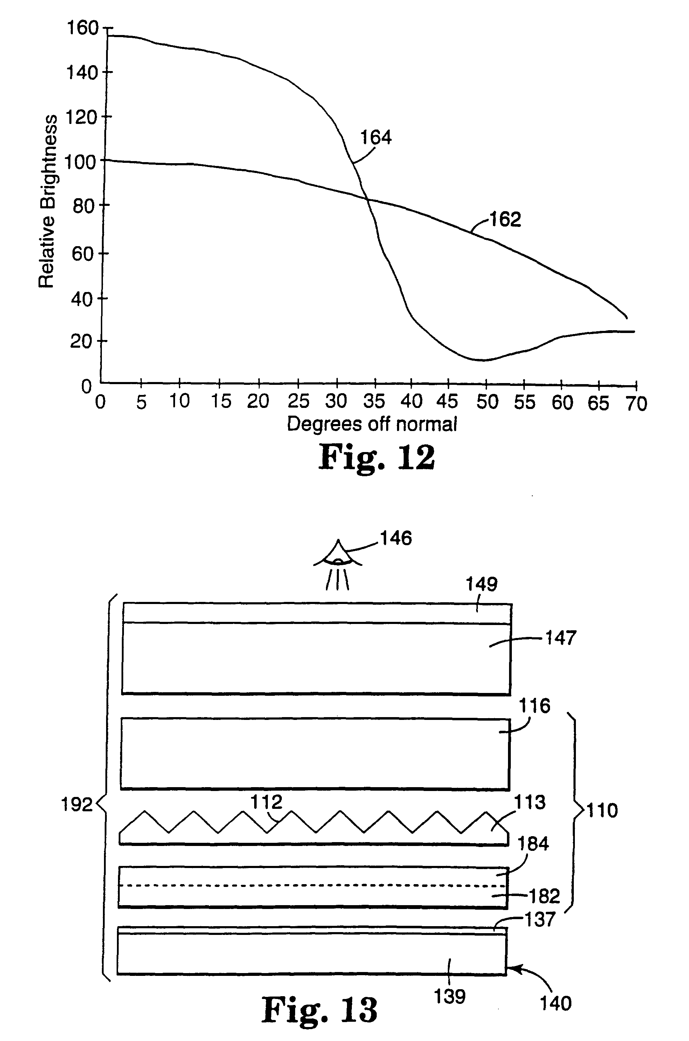

Figure 12 shows test results of a sample of brightness enhanced reflective polarizer material taken with a standard electroluminescent backlight. The electroluminescent backlight met the requirements set forth above for the optical cavity in terms of randomizing the direction and the polarization orientation of incident light. To provide a basis for comparison, curve 162 shows light transmission for a display having only a dichroic polarizer alone without a brightness enhancement reflective polarizer body. Curve 164 represents the intensity of light versus the angular distribution of light for the Y-Z plane of a display which includes a brightness enhanced reflective polarizer body in a configuration with the reflective polarizer body and structured surface as proximate layers, such as that shown and described above with respect to Figure 11. Curve 164 shows that an on-axis brightness increase of about sixty percent as compared to the dichroic polarizer alone is achieved. Also, a brightness decrease of about 50 percent is observed at 60 degrees off-axis.

In yet another example, using a standard backlight, a brightness increase of 100 percent over a dichroic polarizer alone was measured along the display normal to the viewing surface with a brightness enhanced reflective polarizer with the reflective polarizer body and structured surface as proximate layers such as shown and described above with respect to Figure 11. The reflective polarizer alone yielded a brightness increase of 30 percent, while the structured surface alone yielded a brightness increase of 70 percent, thus resulting in a total brightness increase of 100 percent for on-axis viewing.

The difference in brightness increase between these two examples is largely due to the different optical cavities used. The curve of Figure 12 was taken with an electroluminescent backlight, while the latter example was taken with a standard backlight. The reflectance and losses of each type of optical cavity effects the overall brightness increase that can be achieved.

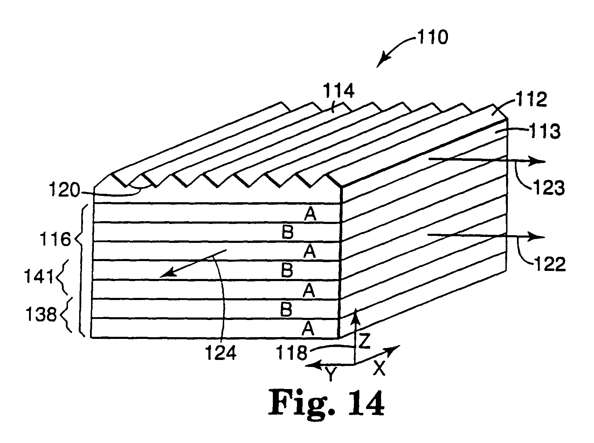

Two dimensional control of the rays exiting the brightness enhanced reflective polarizer body can be achieved using the alternate preferred display configuration 192 shown in Figure 13. There, two optically structured layers 113 and 182, each having a structured surface 112 and 184, respectively, are proximate to each other and to a reflective polarizer body 116. These three elements comprise the brightness enhanced reflective polarizer body 110. Although in Figure 13 the two optically structured layers are shown below the reflective polarizer body 116, it shall be understood that the reflective polarizer body 116 could also be placed between or below the optically structured layers 112 and 182 without departing from the scope of the present invention. Two dimensional control is achieved by crossing the axes of orientation of the structured surfaces 112 and 184. The axes may be oriented at 90 degrees or at some other angle greater than 90 degrees depending upon the display application and associated polarization requirements.

In operation, the first optically structured layer results in a viewing zone of approximately 70 degrees in the Y, Z plane and 110 degrees in the X, Z plane. The light exiting the first optically structured layer 182 then becomes the source for the second optically structured layer 113, whose structured surface 112 has a different axes of orientation than does the structured surface 184 of optically structured layer 182. If the axes of the two optically structured layers 113 and 184 are oriented at 90 degrees, for example, optically structured layer 182 operates on the light within the 110 degree angle of the X, Z plane and compresses the viewing angle in the X, Z plane to a narrower field of something less than 70 degrees, thereby further increasing brightness.

Figure 14 is a schematic and perspective view of the brightness enhanced reflective polarizer 110 shown in isolation. The figure is not drawn to scale to facilitate description of the structure of the invention. Figure 14 among others include a coordinate system 118 that defines X, Y and Z directions that are referred to in the description of the invention.

As seen in Figure 14 the brightness enhanced reflective polarizer 110 includes an optically structured layer 113 that has a structured surface 112. In Figure 14 this optically structured layer 113 is replicated on a polymer layer cast onto the reflective polarizer body 116, resulting in a preferred unitary structure. A unitary structure such as the one shown in Figure 14 may be formed by various known techniques of attaching two films, such as heat lamination or casting and curing the structured surface material on the reflective polarizer where the reflective polarizer acts as the substrate in a process such as is described in United States Patent 5,175,030. For purposes hereof, the statement that the reflective polarizer and the brightness enhancer are unitary shall be understood to mean that they are bonded to one another.

The preferred and illustrative structured surface 112 shown in Figure 14, is an array of prisms, typified by prism 114. Each prism has an apex ridge that extends in the X direction. In the Y, Z plane each prism 114 has a cross section that is an isosceles triangle, with a prism apex angle 120 of ninety degrees. Although an array of prisms is preferred, the specific prism geometry and apex angles 120 may be altered to meet the specific requirements of the application. An array of prisms as shown in Figure 14 is especially useful where it is desirable to confine the light exiting the optical display to a relatively narrow viewing zone 136 shown on Figure 6. However, where other viewing angles are desired, the optically structured layer 113 may take other forms. Although the preferred structured surface 112 functions as a geometric optic it is well known that diffractive or holographic optical elements may be designed to effectively mimic the light directing qualities exhibited by geometric optics. Therefore the term structured surface 112 should be understood to describe both geometric and diffractive optical systems which confine light to a relatively narrow viewing zone 136 (Figure 6). Due to the inherent polarizing nature of an array of prisms, generally speaking, optimum performance is achieved when the axes of the prisms run parallel to the direction in which the reflective polarizer was stretched.

Optical Behavior of Multilayer Stacks

The optical behavior of a multilayer stack such as that shown above in Fig. 4 will now be described in more general terms. The multilayer stack can include hundreds or thousands of layers, and each layer can be made from any of a number of different materials. The characteristics which determine the choice of materials for a particular stack depend upon the desired optical performance of the stack.

The stack can contain as many materials as there are layers in the stack. For ease of manufacture, preferred optical thin film stacks contain only a few different materials. For purposes of illustration, the present discussion will describe multilayer stacks including two materials.

The boundaries between the materials, or chemically identical materials with different physical properties, can be abrupt or gradual. Except for some simple cases with analytical solutions, analysis of the latter type of stratified media with continuously varying index is usually treated as a much larger number of thinner uniform layers having abrupt boundaries but with only a small change in properties between adjacent layers.

The reflectance behavior at any angle of incidence, from any azimuthal direction, is determined by the indices of refraction in each film layer of the film stack. If we assume that all layers in the film stack receive the same process conditions, then we need only look at a single interface of a two component stack to understand the behavior of the entire stack as a function of angle.

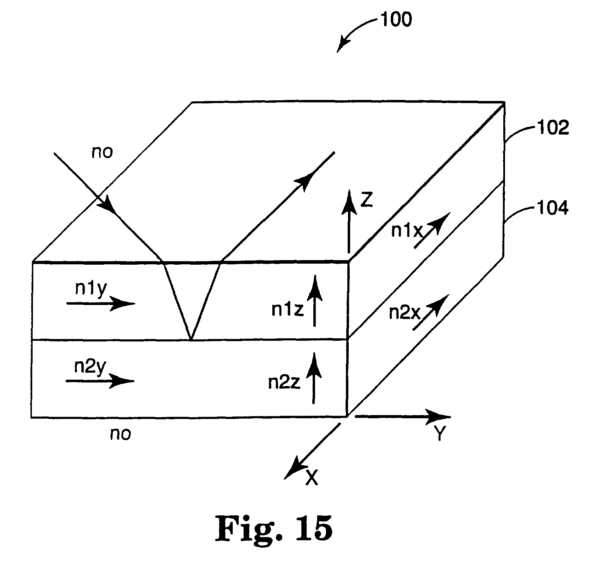

For simplicity of discussion, therefore, the optical behavior of a single interface will be described. It shall be understood, however, that an actual multilayer stack according to the principles described herein could be made of hundreds or thousands of layers. To describe the optical behavior of a single interface, such as the one shown in Fig. 15, the reflectivity as a function of angle of incidence for s and p polarized light for a plane of incidence including the z-axis and one in-plane optic axis will be plotted.

Fig. 15 shows two material film layers forming a single interface, with both immersed in an isotropic medium of index $n_o$. For simplicity of illustration, the present discussion will be directed toward an orthogonal multilayer birefringent system with the optical axes of the two materials aligned, and with one optic axis (z) perpendicular to the film plane, and the other optic axes along the x and y axis. It shall be understood, however, that the optic axes need not be orthogonal, and that nonothorgonal systems are well within the scope of the present invention as defined by the claims. It shall be further understood that the optic axes also need not be aligned with the film axes to fall within the intended scope of the present invention.

The basic mathematical building blocks for calculating the optics of any stack of films of any thickness, are the well known Fresnel reflection and transmission coefficients of the individual film interfaces. The Fresnel coefficients predict the magnitude of the reflectivity of a given interface, at any angle of incidence, with separate formulas for s and p-polarized light.

The reflectivity of a dielectric interface varies as a function of angle of incidence, and for isotropic materials, is vastly different for p and s polarized light. The reflectivity minimum for p polarized light is due to the so called Brewster effect, and the angle at which the reflectance goes to zero is referred to as Brewster's angle.

The reflectance behavior of any film stack, at any angle of incidence, is determined by the dielectric tensors of all films involved. A general theoretical treatment of this topic is given in the text by R.M.A. Azzam and N.M. Bashara, "Ellipsometry and Polarized Light", published by North-Holland, 1987. The results proceed directly from the universally well known Maxwell's equations.

The reflectivity for a single interface of a system is calculated by squaring the absolute value of the reflection coefficients for p and s polarized light, given by equations 1 and 2, respectively. Equations I and 2 are valid for uniaxial orthogonal systems, with the axes of the two components aligned.

1)

$$r_{pp} = \frac{n2z * n2o \sqrt{(n1z^2 - no^2 \sin^2\theta)} - n1z * n1o \sqrt{(n2z^2 - no^2 \sin^2\theta)}}{n2z * n2o \sqrt{(n1z^2 - no^2 \sin^2\theta)} + n1z * n1o \sqrt{(n2z^2 - no^2 \sin^2\theta)}}$$

2)

$$r_{ss} = \frac{\sqrt{(n1o^2 - no^2 \sin^2\theta)} - \sqrt{(n2o^2 - no^2 \sin^2\theta)}}{\sqrt{(n1o^2 - no^2 \sin^2\theta)} + \sqrt{(n2o^2 - no^2 \sin^2\theta)}}$$

where $\theta$ is measured in the isotropic medium.

In a uniaxial birefringent system, $n1x = n1y = n1o$, and $n2x = n2y = n2o$.

For a biaxial birefringent system, equations 1 and 2 are valid only for light with its plane of polarization parallel to the x-z or y-z planes, as defined in Fig. 15. So, for a biaxial system, for light incident in the x-z plane, $n1o = n1x$ and $n2o = n2x$ in equation 1 (for p-polarized light), and $n1o = n1y$ and $n2o = n2y$ in equation 2 (for s-polarized light). For light incident in the y-z plane, $n1o = n1y$ and $n2o = n2y$ in equation 1 (for p-polarized light), and $n1o = n1x$ and $n2o = n2x$ in equation 2 (for s-polarized light).

Equations 1 and 2 show that reflectivity depends upon the indices of refraction in the x, y and z directions of each material in the stack. In an isotropic material, all three indices are equal, thus $nx = ny = nz$. The relationship between nx, ny and nz determine the optical characteristics of the material. Different relationships between the three indices lead to three general categories of materials: isotropic, uniaxially birefringent, and biaxially birefringent.

A uniaxially birefringent material is defined as one in which the index of refraction in one direction is different from the indices in the other two directions. For purposes of the present discussion, the convention for describing uniaxial birefringent systems is for the condition $nx = ny \neq nz$. The x and y axes are defined as the in-plane axes and the respective indices, nx and ny, will be referred to as the in-plane indices.

One method of creating a uniaxial birefringent system is to biaxially stretch a polymeric multilayer stack (e. g., stretched along two dimensions). Biaxial stretching of the multilayer stack results in differences between refractive indices of adjoining layers for planes parallel to both axes thus resulting in reflection of light in both planes of polarization.

A uniaxial birefringent material can have either positive or negative uniaxial birefringence. Positive uniaxial birefringence occurs when the z-index is greater than the in-plane indices ($nz > nx$ and $ny$). Negative uniaxial birefringence occurs when the z-index is less than the in-plane indices ($nz < nx$ and $ny$).

A biaxial birefringent material is defined as one in which the indices of refraction in all three axes are different, e.g., $nx \neq ny \neq nz$. Again, the nx and ny indices will be referred to as the in-plane indices. A biaxial birefringent system can be made by stretching the multilayer stack in one direction. In other words the stack is uniaxially stretched. For purposes of the present discussion, the x direction will be referred to as the stretch direction for biaxial birefringent stacks.

Uniaxial Birefringent Systems (Mirrors)

The optical properties of uniaxial birefringent systems will now be discussed. As discussed above, the general conditions for a uniaxial birefringent material are $nx = ny \neq nz$. Thus if each layer 102 and 104 in Fig. 15 is uniaxially birefringent, $n1x = n1y$ and $n2x = n2y$. For purposes of the present discussion, assume that layer 102 has larger in-plane indices than layer 104, and that thus $n1 > n2$ in both the x and y directions. The optical behavior of a uniaxial birefringent multilayer system can be adjusted by varying the values of n1z and n2z to introduce different levels of positive or negative birefringence.

Equation 1 described above can be used to determine the reflectivity of a single interface in a uniaxial birefringent system composed of two layers such as that shown in Fig. 15. Equation 2, for s polarized light, is easily shown to be identical to that of the simple case of isotropic films ($nx = ny = nz$), so we need only examine equation 1. For purposes of illustration, some specific, although generic, values for the film indices will be assigned. Let $n1x = n1y = 1.75$, $n1z = $ variable, $n2x = n2y = 1.50$, and $n2z = $ variable. In order to illustrate various possible Brewster angles in this system, $no = 1.60$ for the surrounding isotropic media.

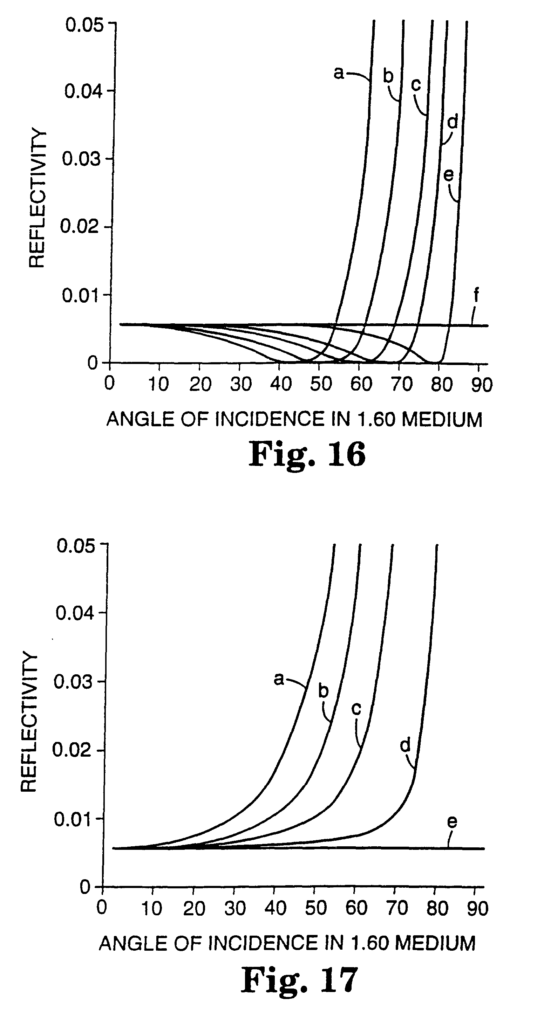

Fig. 16 shows reflectivity versus angle curves for p-polarized light incident from the isotropic medium to the birefringent layers, for cases where n1z is numerically greater than or equal to n2z ($n1z \geq n2z$). The curves shown in Fig. 16 are for the following z-index values: a) $n1z = 1.75$, $n2z = 1.50$; b) $n1z = 1.75$, $n2z = 1.57$; c) $n1z = 1.70$, $n2z = 1.60$; d) $n1z = 1.65$, $n2z = 1.60$; e) $n1z = 1.61$, $n2z = 1.60$; and f) $n1z = 1.60 = n2z$. As n1z approaches n2z, the Brewster angle, the angle at which reflectivity goes to zero, increases. Curves a - e are strongly angular dependent. However, when $n1z = n2z$ (curve f), there is no angular dependence to reflectivity. In other words, the reflectivity for curve f is constant for all angles of incidence. At that point, equation 1 reduces to the angular independent form: $(n2o - n1o)/(n2o + n1o)$. When $n1z = n2z$, there is no Brewster effect and there is constant reflectivity for all angles of incidence.

Fig. 17 shows reflectivity versus angle of incidence curves for cases where n1z is numerically less than or equal to n2z. Light is incident from isotropic medium to the birefringent layers. For these cases, the reflectivity monotonically increases with angle of incidence. This is the behavior that would be observed for s-polarized light. Curve a in Fig. 17 shows the single case for s polarized light. Curves b-e show cases for p polarized light for various values of nz, in the following order: b) n1z =1.50, n2z = 1.60; c) n1z = 1.55, n2z = 1.60; d) n1z =1.59, n2z = 1.60; and e) n1z = 1.60 = n2z. Again, when n1z = n2z (curve e), there is no Brewster effect, and there is constant reflectivity for all angles of incidence.

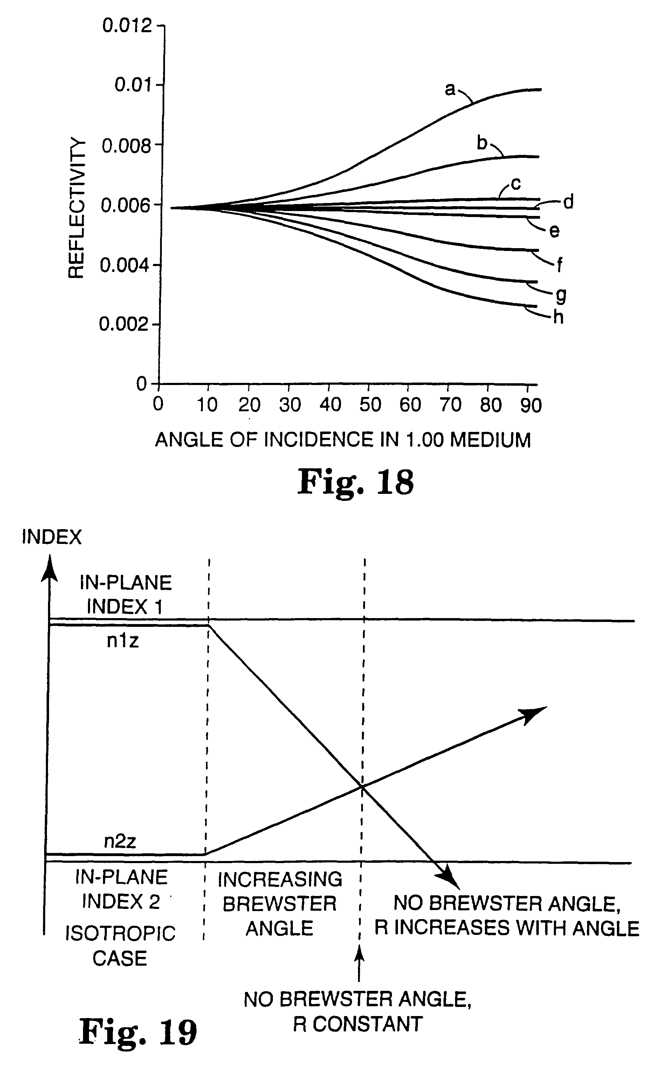

Fig. 18 shows the same cases as Fig. 16 and 17 but for an incident medium of index no =1.0 (air). The curves in Fig. 18 are plotted for p polarized light at a single interface of a positive uniaxial material of indices n2x = n2y = 1.50, n2z = 1.60, and a negative uniaxially birefringent material with n1x = n1y = 1.75, and values of n1z, in the following order, from top to bottom, of: a) 1.50; b) 1.55; c) 1.59; d) 1.60; f) 1.61; g) 1.65; h) 1.70; and i) 1.75. Again, as was shown in Figs. 16 and 17, when the values of n1z and n2z match (curve d), there is no angular dependence to reflectivity.

Figs. 16, 17 and 18 show that the cross-over from one type of behavior to another occurs when the z-axis index of one film equals the z-axis index of the other film. This is true for several combinations of negative and positive uniaxially birefringent, and isotropic materials. Other situations occur in which the Brewster angle is shifted to larger or smaller angles.

Various possible relationships between in-plane indices and z-axis indices are illustrated in Figs.19, 20 and 21. The vertical axes indicate relative values of indices and the horizontal axes are used to simply separate the various conditions. Each Figure begins at the left with two isotropic films, where the z-index equals the in-plane indices. As one proceeds to the right, the in-plane indices are held constant and the various z-axis indices increase or decrease, indicating the relative amount of positive or negative birefringence.

The case described above with respect to Figs. 16, 17, and 18 is illustrated in Fig. 19. The in-plane indices of material one are greater than the in-plane indices of material two, material 1 has negative birefringence (n1z less than in-plane indices), and material two has positive birefringence (n2z greater than in-plane indices). The point at which the Brewster angle disappears and reflectivity is constant for all angles of incidence is where the two z-axis indices are equal. This point corresponds to curve f in Fig. 16, curve e in Fig. 17 or curve d in Fig. 18.

In Fig. 16, material one has higher in-plane indices than material two, but material one has positive birefringence and material two has negative birefringence. In this case, the Brewster minimum can only shift to lower values of angle.

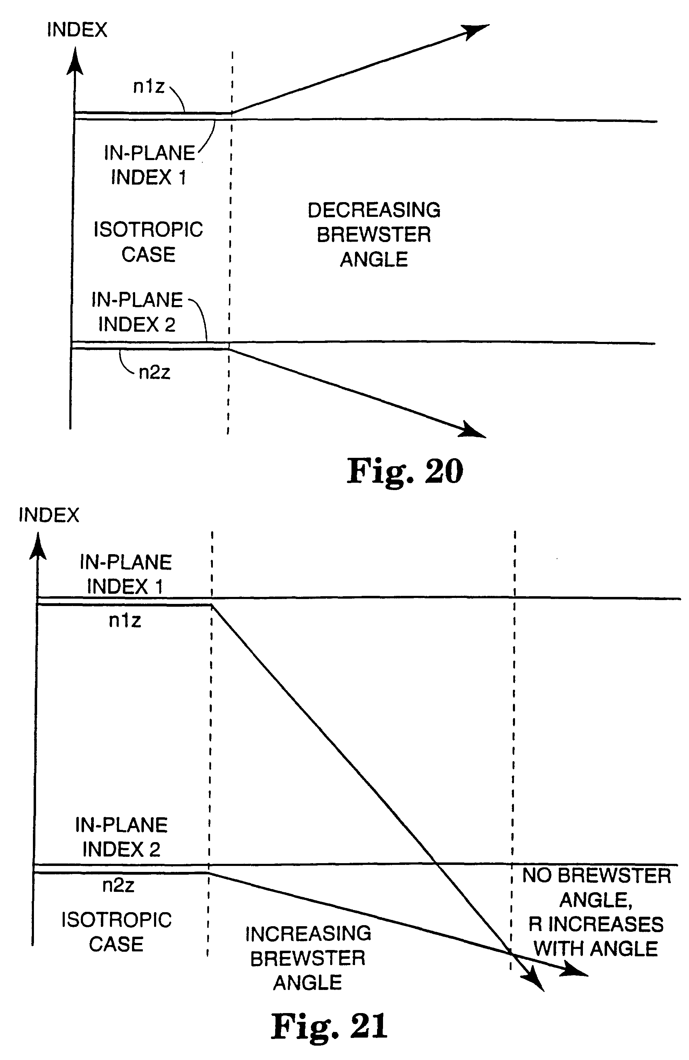

Both Figs. 19 and 20 are valid for the limiting cases where one of the two films is isotropic. The two cases are where material one is isotropic and material two has positive birefringence, or material two is isotropic and material one has negative birefringence. The point at which there is no Brewster effect is where the z-axis index of the birefringent material equals the index of the isotropic film.

Another case is where both films are of the same type, i.e., both negative or both positive birefringent. Fig. 21 shows the case where both films have negative birefringence. However, it shall be understood that the case of two positive birefringent layers is analogous to the case of two negative birefringent layers shown in Fig. 21. As before, the Brewster minimum is eliminated only if one z-axis index equals or crosses that of the other film.

Yet another case occurs where the in-plane indices of the two materials are equal, but the z-axis indices differ. In this case, which is a subset of all three cases shown in Figs. 19 - 21, no reflection occurs for s polarized light at any angle, and the reflectivity for p polarized light increases monotonically with increasing angle of incidence. This type of article has increasing reflectivity for p-polarized light as angle of incidence increases, and is transparent to s-polarized light. This article can be referred to, then, as a "p-polarizer".

Those of skill in the art will readily recognize that the above described principles describing the behavior of uniaxially birefringent systems can be applied to create the desired optical effects for a wide variety of circumstances. The indices of refraction of the layers in the multilayer stack can be manipulated and tailored to produce devices having the desired optical properties. Many negative and positive uniaxial birefringent systems can be created with a variety of in-plane and z-axis indices, and many useful devices can be designed and fabricated using the principles described here.

Biaxial Birefringent Systems (Polarizers)

Referring again to Fig. 15, two component orthogonal biaxial birefringent systems will now be described. Again, the system can have many layers, but an understanding of the optical behavior of the stack is achieved by examining the optical behavior at one interface.

A biaxial birefringent system can be designed to give high reflectivity for light with its plane of polarization parallel to one axis, for all angles of incidence, and simultaneously have low reflectivity for light with its plane of polarization parallel to the other axis at all angles of incidence. As a result, the biaxial birefringent system acts as a polarizer, transmitting light of one polarization and reflecting light of the other polarization. By controlling the three indices of refraction of each film, nx, ny and nz, the desired polarizer behavior can be obtained.

The multilayer reflecting polarizer of PEN/coPEN described above is an example of a biaxial birefringent system. It shall be understood, however, that in general the materials used to construct the multilayer stack need not be polymeric. Any materials falling within the general principles described herein could be used to construct the multilayer stack.

Referring again to Fig. 15, we assign the following values to the film indices for purposes of illustration: n1x = 1.88, n1y = 1.64, n1z = variable, n2x = 1.65, n2y = variable, and n2z = variable. The x direction is referred to as the extinction direction and the y direction as the transmission direction.

Equation 1 can be used to predict the angular behavior of the biaxial birefringent system for two important cases of light with a plane of incidence in either the stretch or the non-stretch directions. The polarizer is a mirror in one polarization direction and a window in the other direction. In the stretch direction, the large index differential of 1.88 - 1.65 = 0.23 in a multilayer stack with hundreds of layers will yield very high reflectivities for s-polarized light. For p-polarized light the reflectance at various angles depends on the n1z/n2z index differential.

In most applications, the ideal reflecting polarizer has high reflectance along one axis and zero reflectance along the other, at all angles of incidence. If some reflectivity occurs along the transmission axis, and if it is different for various wavelengths, the efficiency of the polarizer is reduced, and color is introduced into the transmitted light. Both effects are undesirable. This is caused by a large z-index mismatch, even if the in-plane y indices are matched. The resulting system thus has large reflectivity for p, and is highly transparent to s polarized light. This case was referred to above in the analysis of the mirror cases as a "p polarizer".

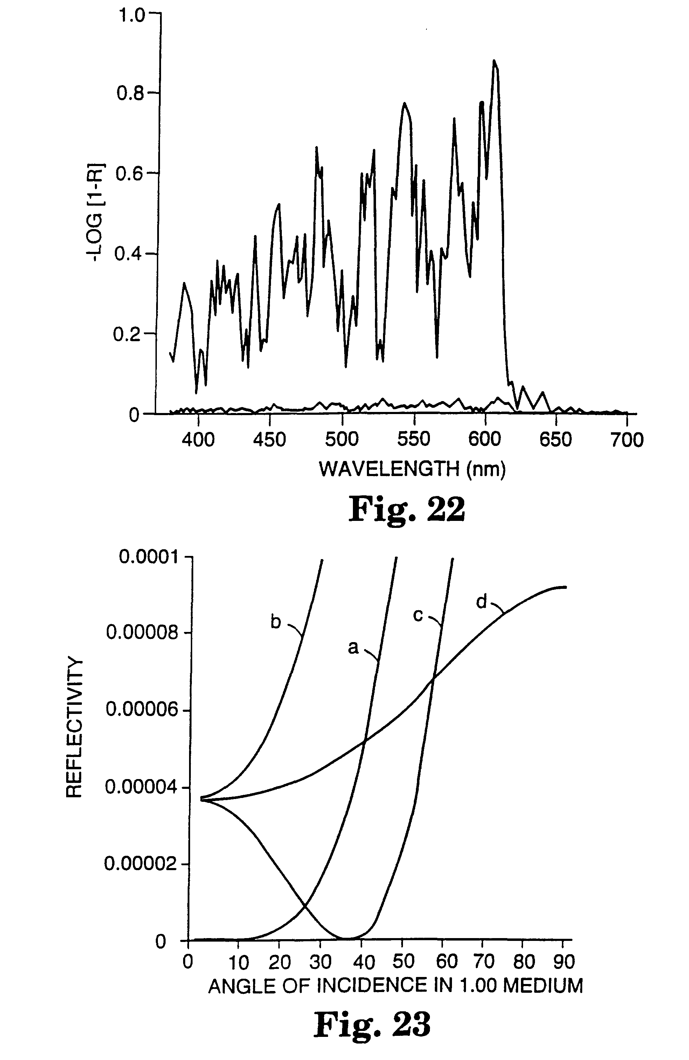

Fig. 22 shows the reflectivity (plotted as -Log[1-R]) at 75° for p polarized light with its plane of incidence in the non-stretch direction, for an 800 layer stack of PEN/coPEN. The reflectivity is plotted as function of wavelength across the visible spectrum (400 - 700 nm). The relevant indices for curve a at 550 nm are n1y =1.64, n1z = 1.52, n2y = 1.64 and n2z = 1.63. The model stack design is a simple linear thickness grade for quarterwave pairs, where each pair is 0.3% thicker than the previous pair. All layers were assigned a random thickness error with a gaussian distribution and a 5% standard deviation.

Curve a shows high off-axis reflectivity across the visible spectrum along the transmission axis (the y-axis) and that different wavelengths experience different levels of reflectivity. Since the spectrum is sensitive to layer thickness errors and spatial nonuniformities, such as film caliper, this gives a biaxial birefringent system with a very nonuniform and "colorful" appearance. Although a high degree of color may be desirable for certain applications, it is desirable to control the degree of off-axis color, and minimize it for those applications requiring a uniform, low color appearance, such as LCD displays or other types of displays.

If the film stack were designed to provide the same reflectivity for all visible wavelengths, a uniform, neutral gray reflection would result. However, this would require almost perfect thickness control. Instead, off-axis reflectivity, and off-axis color can be minimized by introducing an index mismatch to the non-stretch in-plane indices (n1y and n2y) that create a Brewster condition off axis, while keeping the s-polarization reflectivity to a minimum.

Fig. 23 explores the effect of introducing a y-index mismatch in reducing off-axis reflectivity along the transmission axis of a biaxial birefringent system. With n1z = 1.52 and n2z = 1.63 ($\Delta$nz = 0.11), the following conditions are plotted for p polarized light: a) n1y = n2y = 1.64; b) n1y = 1.64, n2y = 1.62; c) n1y = 1.64, n2y = 1.66. Curve a shows the reflectivity where the in-plane indices n1y and n2y are equal. Curve a has a reflectance minimum at 0°, but rises steeply after 20°. For curve b, n1y > n2y, and reflectivity increases rapidly. Curve c, where n1y < n2y, has a reflectance minimum at 38°, but rises steeply thereafter. Considerable reflection occurs as well for s polarized light for n1y ≠ n2y, as shown by curve d. Curves a -d of Fig. 23 indicate that the sign of the y-index mismatch (n1y - n2y) should be the same as the z-index mismatch (n1z- n2z) for a Brewster minimum to exist. For the case of n1y = n2y, reflectivity for s polarized light is zero at all angles.

By reducing the z-axis index difference between layers, the off axis reflectivity can be further reduced. If n1z is equal to n2z, Fig. 18 indicates that the extinction axis will still have a high reflectivity off-angle as it does at normal incidence, and no reflection would occur along the nonstretch axis at any angle because both indices are matched (e. g., n1y = n2y and n1z = n2z).

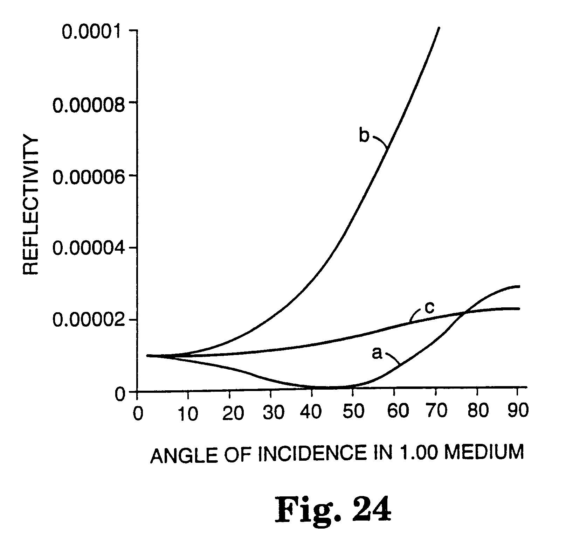

Exact matching of the two y indices and the two z indices may not be possible in some polymer systems. If the z-axis indices are not matched in a polarizer construction, a slight mismatch may be required for in-plane indices n1y and n2y. Another example is plotted in FIG. 24 assuming n1z = 1.56 and n2z = 1.60 ($\Delta$nz = 0.04), with the following y indices a) n1y = 1.64, n2y = 1.65; b) n1y = 1.64, n2y = 1.63. Curve c is for s-polarized light for either case. Curve a, where the sign of the y-index mismatch is the same as the z-index mismatch, results in the lowest off-angle reflectivity.

The computed off-axis reflectance of an 800 layer stack of films at 75° angle of incidence with the conditions of curve a in Fig. 24 is plotted as curve b in Fig. 22. Comparison of curve b with curve a in Fig. 22 shows that there is far less off-axis reflectivity, and therefore lower perceived color, for the conditions plotted in curve b. The relevant indices for curve b at 550 nm are n1y = 1.64, n1z = 1.56, n2y = 1.65 and n2z = 1.60.

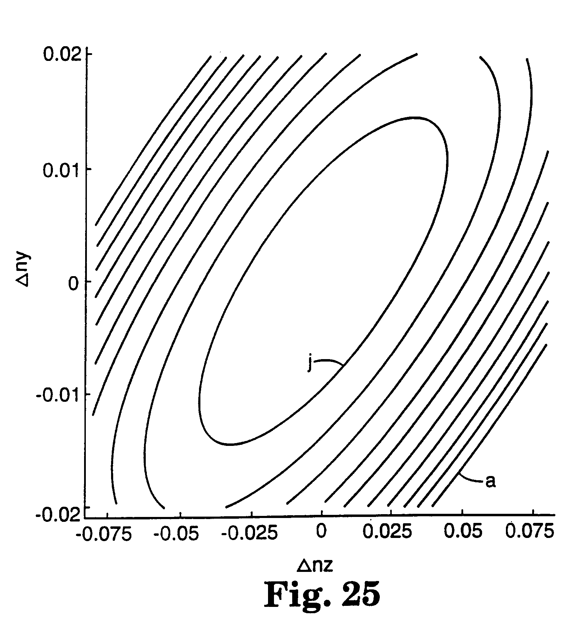

Fig. 25 shows a contour plot of equation 1 which summarizes the off axis reflectivity discussed in relation to Fig. 15 for p-polarized light. The four independent indices involved in the non-stretch direction have been reduced to two index mismatches, $\Delta$nz and $\Delta$ny. The plot is an average of 6 plots at various angles of incidence from 0° to 75° in 15 degree increments. The reflectivity ranges from 0.4 x 10$^{-4}$ for contour a, to 4.0 x 10$^{-4}$ for contour j, in constant increments of 0.4 x 10$^{-4}$. The plots indicate how high reflectivity caused by an index mismatch along one optic axis can be offset by a mismatch along the other axis.

Thus, by reducing the z-index mismatch between layers of a biaxial birefringent systems, and/or by introducing a y-index mismatch to produce a Brewster effect, off-axis reflectivity, and therefore off-axis color, are minimized along the transmission axis of a multilayer reflecting polarizer.

It should also be noted that narrow band polarizers operating over a narrow wavelength range can also be designed using the principles described herein. These can be made to produce polarizers in the red, green, blue, cyan, magenta, or yellow bands, for example.

Materials Selection and Processing

With the above-described design considerations established, one of ordinary skill will readily appreciate that a wide variety of materials can be used to form multilayer mirrors or polarizers according to the invention when processed under conditions selected to yield the desired refractive index relationships. In general, all that is required is that one of the materials have a different index of refraction in a selected direction compared to the second material. This differential can be achieved in a variety of ways, including stretching during or after film formation (e.g., in the case of organic polymers), extruding (e.g., in the case of liquid crystalline materials), or coating. In addition, it is preferred that the two materials have similar rheological properties (e.g., melt viscosities) such that they can be co-extruded.

In general, appropriate combinations may be achieved by selecting, as the first material, a crystalline or semi-crystalline organic polymer and an organic polymer for the second material as well. The second material, in turn, may be crystalline, semi-crystalline, or amorphous, or may have a birefringence opposite that of the first material.

Specific examples of suitable materials include polyethylene naphthalate (PEN) and isomers thereof (e.g., 2,6-, 1,4-, 1,5-, 2,7-, and 2,3-PEN), polyalkylene terephthalates (e.g., polyethylene terephthalate, polybutylene terephthalate, and poly-1,4-cyclohexanedimethylene terephthalate), polyimides (e.g., polyacrylic imides), polyetherimides, atactic polystyrene, polycarbonates, polymethacrylates (e.g., polyisobutyl methacrylate, polypropylmethacrylate, polyethylmethacrylate, and polymethylmethacrylate), polyacrylates (e.g., polybutylacrylate and polymethylacrylate), cellulose derivatives (e.g., ethyl cellulose, cellulose acetate, cellulose propionate, cellulose acetate butyrate, and cellulose nitrate), polyalkylene polymers (e.g., polyethylene, polypropylene, polybutylene, polyisobutylene, and poly(4-methyl) pentene), fluorinated polymers (e.g., perfluoroalkoxy resins, polytetrafluoroethylene, fluorinated ethylenepropylene copolymers, polyvinylidene fluoride, and polychlorotrifluoroethylene), chlorinated polymers (e.g., polyvinylidene chloride and polyvinylchloride), polysulfones, polyethersulfones, polyacrylonitrile, polyamides, silicone resins, epoxy resins, polyvinylacetate, polyether-amides, ionomeric resins, elastomers (e.g., polybutadiene, polyisoprene, and neoprene), and polyurethanes. Also suitable are copolymers, e.g., copolymers of PEN (e.g., copolymers of 2,6-, 1,4-, 1,5-, 2,7-, and/or 2,3-naphthalene dicarboxylic acid, or esters thereof, with (a) terephthalic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), copolymers of polyalkylene terephthalates (e.g., copolymers of terephthalic acid, or esters thereof, with (a) naphthalene dicarboxylic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), and styrene copolymers (e.g., styrene-butadiene copolymers and styrene-acrylonitrile copolymers), 4, 4'-bibenzoic acid and ethylene glycol. In addition, each individual layer may include blends of two or more of the above-described polymers or copolymers (e.g., blends of SPS and atactic polystyrene).

Particularly preferred combinations of layers in the case of polarizers include PEN/co-PEN, polyethylene terephthalate (PET)/co-PEN, PEN/SPS, PET/SPS, PEN/Eastair, and PET/Eastair, where "co-PEN" refers to a copolymer or blend based upon naphthalene dicarboxylic acid (as described above) and Eastair is polycyclohexanedimethylene terephthalate commercially available from Eastman Chemical Co.

Particularly preferred combinations of layers in the case of mirrors include PET/Ecdel, PEN/Ecdel, PEN/SPS, PEN/THV, PEN/co-PET, and PET/SPS, where "co-PET" refers to a copolymer or blend based upon terephthalic acid (as described above), Ecdel is a thermoplastic polyester commercially available from Eastman Chemical Co., and THV is a fluoropolymer commercially available from 3M Co.

The number of layers in the device is selected to achieve the desired optical properties using the minimum number of layers for reasons of economy. In the case of both polarizers and mirrors, the number of layers is preferably less than 10,000, more preferably less than 5,000, and (even more preferably) less than 2,000.

As discussed above, the ability to achieve the desired relationships among the various indices of refraction (and thus the optical properties of the multilayer device) is influenced by the processing conditions used to prepare the multilayer device. In the case of organic polymers which can be oriented by stretching, the devices are generally prepared by co-extruding the individual polymers to form a multilayer film and then orienting the film by stretching at a selected temperature, optionally followed by heat-setting at a selected temperature. Alternatively, the extrusion and orientation steps may be performed simultaneously. In the case of polarizers, the film is stretched substantially in one direction (uniaxial orientation), while in the case of mirrors the film is stretched substantially in two directions (biaxial orientation).

The film may be allowed to dimensionally relax in the cross-stretch direction from the natural reduction in cross-stretch (equal to the square root of the stretch ratio) to being constrained (i.e., no substantial change in cross-stretch dimensions). The film may be stretched in the machine direction, as with a length orienter, in width using a tenter, or at diagonal angles.

The pre-stretch temperature, stretch temperature, stretch rate, stretch ratio, heat set temperature, heat set time, heat set relaxation, and cross-stretch relaxation are selected to yield a multilayer device having the desired refractive index relationship. These variables are inter-dependent; thus, for example, a relatively low stretch rate could be used if coupled with, e.g., a relatively low stretch temperature. It will be apparent to one of ordinary skill how to select the appropriate combination of these variables to achieve the desired multilayer device. In general, however, a stretch ratio of 1:2-10 (more preferably 1:3-7) is preferred in the case of polarizers. In the case of mirrors, it is preferred that the stretch ratio along one axis be in the range of 1:2-10 (more preferably 1:2-8, and most preferably 1:3-7) and the stretch ratio along the second axis be in the range of 1:-0.5-10 (more preferably 1:1-7, and most preferably 1:3-6).

Suitable multilayer devices may also be prepared using techniques such as spin coating (e.g., as described in Boese et al., J. Polym. Sci.: Part B, 30:1321 (1992)) and vacuum deposition; the latter technique is particularly useful in the case of crystalline polymeric organic and inorganic materials.

The invention will now be described by way of the following examples. In the examples, because optical absorption is negligible, reflection equals 1 minus tranmission (R = 1 - T).

**Mirror Examples:**

**PET:Ecdel, 601** A coextruded film containing 601 layers was made on a sequential flat-film-making line via a coextrusion process. Polyethylene terephthalate (PET) with an Intrinsic Viscosity of 0.6 dl/g (60 wt. % phenol/40 wt. % dichlorobenzene) was delivered by one extruder at a rate of 75 pounds per hour and Ecdel 9966 (a thermoplastic elastomer available from Eastman Chemical) was delivered by another extruder at a rate of 65 pounds per hour. PET was on the skin layers. The feedblock method (such as that described in U.S. Patent 3,801,429) was used to generate 151 layers which was passed through two multipliers producing an extrudate of 601 layers. U.S. Patent 3,565,985 describes examplary coextrusion multipliers. The web was length oriented to a draw ratio of about 3.6 with the web temperature at about 210°F. The film was subsequently preheated to about 235°F in about 50 seconds and drawn in the transverse direction to a draw ratio of about 4.0 at a rate of about 6% per second. The film was then relaxed about 5% of its maximum width in a heat-set oven set at 400°F. The finished film thickness was 2.5 mil.

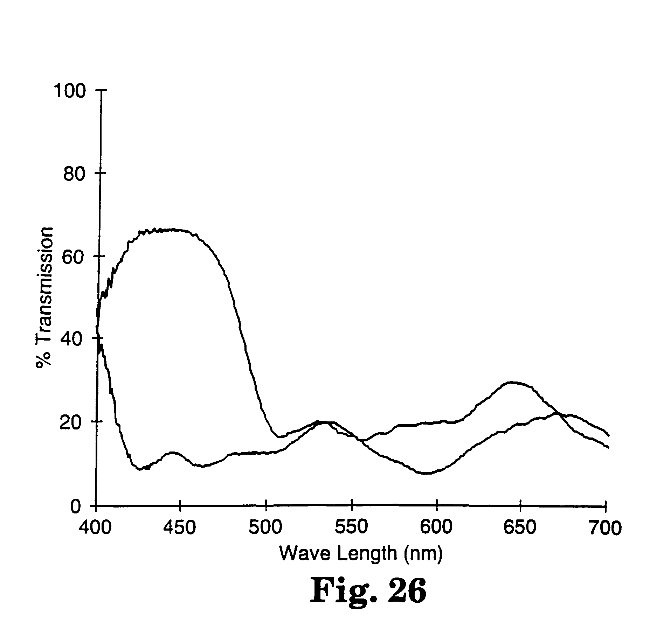

The cast web produced was rough in texture on the air side, and provided the transmission as shown in Figure 26. The % transmission for p-polarized light at a 60° angle (curve b) is similar the value at normal incidence (curve a) (with a wavelength shift).

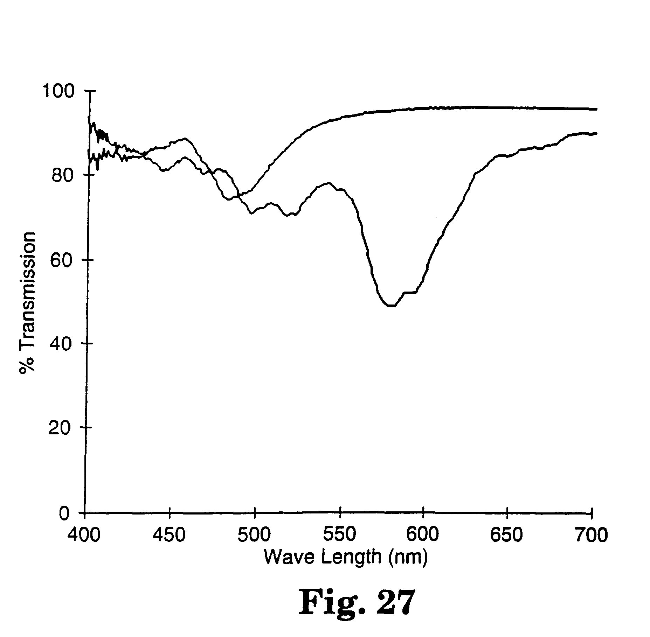

For comparison, film made by Mearl Corporation, presumably of isotropic materials (see Fig. 27) shows a noticeable loss in reflectivity for p-polarized light at a 60° angle (curve b, compared to curve a for normal incidence).

**PET:Ecdel, 151** A coextruded film containing 151 layers was made on a sequential flat-film-making line via a coextrusion process. Polyethylene terephthalate (PET) with an Intrinsic Viscosity of 0.6 dl/g (60 wt phenol/40 wt. % dichlorobenzene) was delivered by one extruder at a rate of 75 pounds per hour and Ecdel 9966 (a thermoplastic elastomer available from Eastman Chemical) was delivered by another extruder at a rate of 65 pounds per hour. PET was on the skin layers. The feedblock method was used to generate 151 layers. The web was length oriented to a draw ratio of about 3.5 with the web temperature at about 210°F. The film was subsequently preheated to about 215°F in about 12 seconds and drawn in the transverse direction to a draw ratio of about 4.0 at a rate of about 25% per second. The film was then relaxed about 5% of its maximum width in a heat-set oven set at 400°F in about 6 seconds. The finished film thickness was about 0.6 mil.

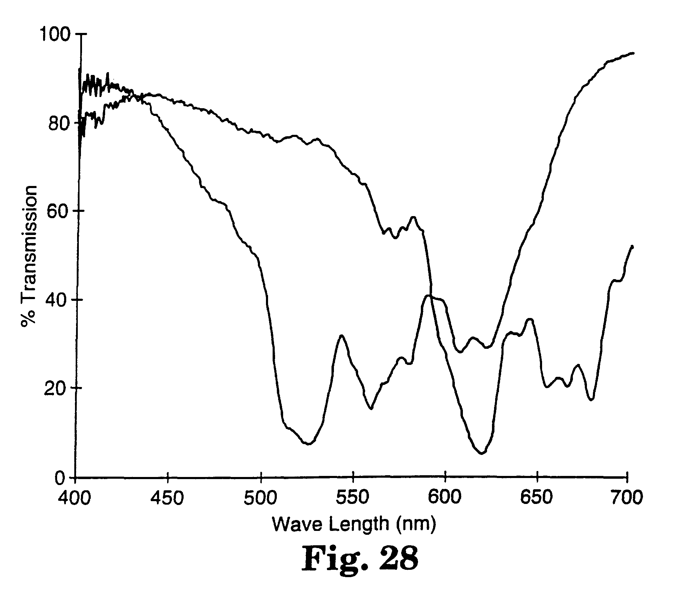

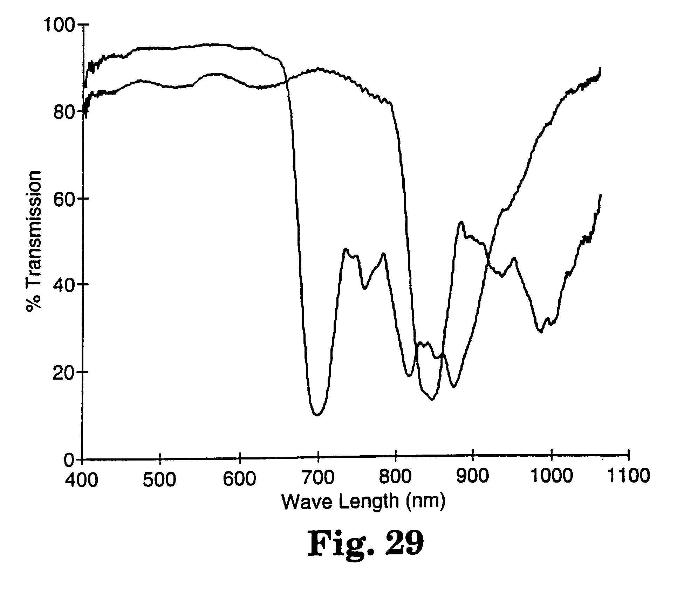

The transmission of this film is shown in Figure 28. The % transmission for p-polarized light at a 60° angle (curve b) is similar the value at normal incidence (curve a) with a wavelength shift. At the same extrusion conditions the web speed was slowed down to make an infrared reflecting film with a thickness of about 0.8 mils. The transmission is shown in Fig. 29 (curve a at normal incidence, curve b at 60 degrees).

**PEN:Ecdel, 225** A coextruded film containing 225 layers was made by extruding the cast web in one operation and later orienting the film in a laboratory film-stretching apparatus. Polyethylene naphthalate (PEN) with an Intrinsic Viscosity of 0.5 dl/g (60 wt. % phenol/40 wt. % dichlorobenzene) was delivered by one extruder at a rate of 18 pounds per hour and Ecdel 9966 (a thermoplastic elastomer available from Eastman Chemical) was delivered by another extruder at a rate of 17 pounds per hour. PEN was on the skin layers. The feedblock method was used to generate 57 layers which was passed through two multipliers producing an extrudate of 225 layers. The cast web was 12 mils thick and 12 inches wide. The web was later biaxially oriented using a laboratory stretching device that uses a pantograph to grip a square section of film and simultaneously stretch it in both directions at a uniform rate. A 7.46 cm square of web was loaded into the stretcher at about 100°C and heated to 130°C in 60 seconds. Stretching then commenced at 100%/sec (based on original dimensions) until the sample was stretched to about 3.5x3.5. Immediately after the stretching the sample was cooled by blowing room temperature air on it.

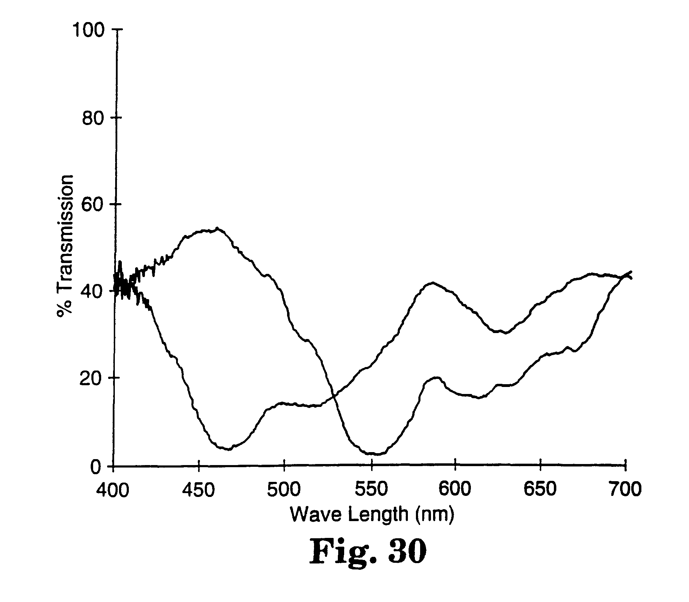

Figure 30 shows the optical response of this multilayer film (curve a at normal incidence, curve b at 60 degrees). Note that the % transmission for p-polarized light at a 60° angle is similar to what it is at normal incidence (with some wavelength shift).

**PEN:THV 500, 449**        A coextruded film containing 449 layers was made by extruding the cast web in one operation and later orienting the film in a laboratory film-stretching apparatus. Polyethylene naphthalate (PEN) with an Intrinsic Viscosity of 0.53 dl/g (60 wt. % phenol/40 wt. % dichlorobenzene) was delivered by one extruder at a rate of 56 pounds per hour and THV 500 (a fluoropolymer available from Minnesota Mining and Manufacturing Company) was delivered by another extruder at a rate of 11 pounds per hour. PEN was on the skin layers and 50% of the PEN was present in the two skin layers. The feedblock method was used to generate 57 layers which was passed through three multipliers producing an extrudate of 449 layers. The cast web was 20 mils thick and 12 inches wide. The web was later biaxially oriented using a laboratory stretching device that uses a pantograph to grip a square section of film and simultaneously stretch it in both directions at a uniform rate. A 7.46 cm square of web was loaded into the stretcher at about 100°C and heated to 140°C in 60 seconds. Stretching then commenced at 10%/sec (based on original dimensions) until the sample was stretched to about 3.5x3.5. Immediately after the stretching the sample was cooled by blowing room temperature air at it.

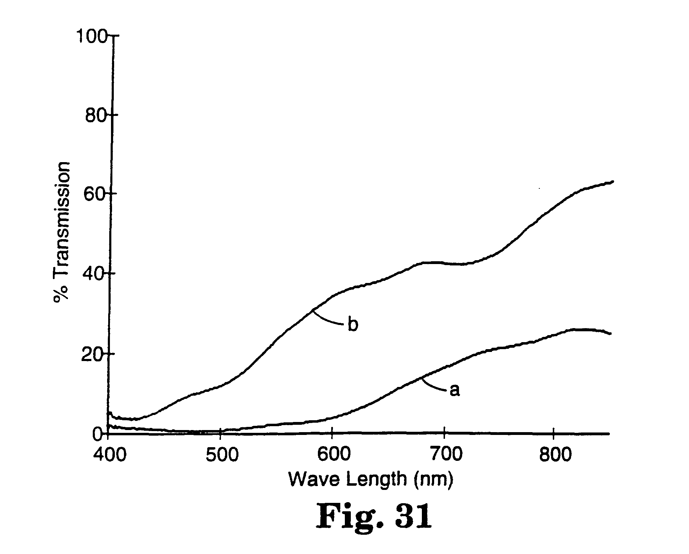

Figure 31 shows the transmission of this multilayer film. Again, curve a shows the response at normal incidence, while curve b shows the response at 60 degrees.

**Polarizer Examples:**

**PEN:CoPEN, 449--Low Color**        A coextruded film containing 449 layers was made by extruding the cast web in one operation and later orienting the film in a laboratory film-stretching apparatus. Polyethylene naphthalate (PEN) with an Intrinsic Viscosity of 0.56 dl/g (60 wt. % phenol/40 wt. % dichlorobenzene) was delivered by one extruder at a rate of 43 pounds per hour and a CoPEN (70 mol% 2,6 NDC and 30 mol% DMT) with an intrinsic viscosity of 0.52 (60 wt. % phenol/40 wt. % dichlorobenzene) was delivered by another extruder at a rate of 25 pounds per hour. PEN was on the skin layers and 40% of the PEN was present in the two skin layers. The feedblock method was used to generate 57 layers which was passed through three multipliers producing an extrudate of 449 layers. The cast web was 10 mils thick and 12 inches wide. The web was later uniaxially oriented using a laboratory stretching device that uses a pantograph to grip a square section of film and stretch it in one direction while it is constrained in the other at a uniform rate. A 7.46 cm square of web was loaded into the stretcher at about 100°C and heated to 140°C in 60 seconds. Stretching then commenced at 10%/sec (based on original dimensions) until the sample was stretched to about 5.5x1. Immediately after the stretching the sample was cooled by blowing room temperature air at it.

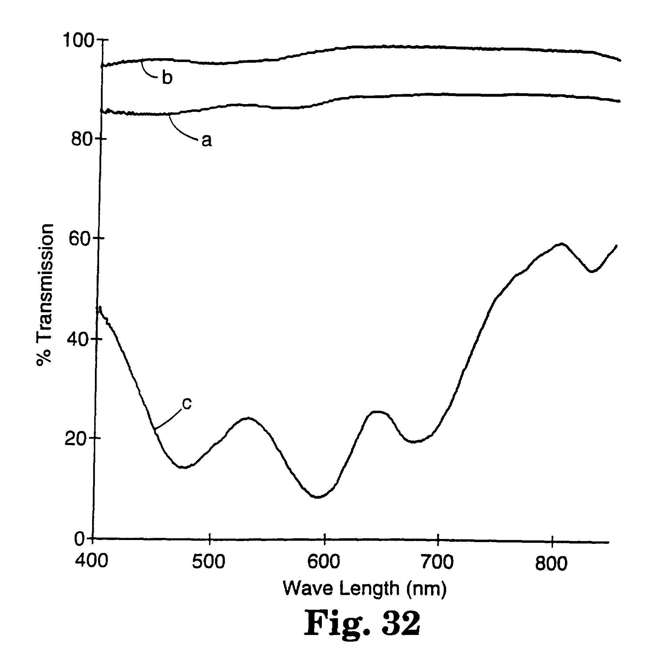

Figure 32 shows the transmission of this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (85-100%). Transmission is higher for p-polarized light at 60° incidence because the air/PEN interface has a Brewster angle near 60°, so the tranmission at 60° incidence is nearly 100%. Also note the high extinction of s-polarized light in the visible range (400-700nm) shown by curve c.

**PEN:CoPEN, 601-High Color**        A coextruded film containing 601 layers was produced by extruding the web and two days later orienting the film on a different tenter than described in all the other examples. Polyethylene Naphthalate (PEN) with an Intrinsic Viscosity of 0.5 dl/g (60 wt. % phenol/40 wt. % dichlorobenzene) was delivered by one extruder at a rate of 75 pounds per hour and CoPEN (70 mol% 2,6 NDC and 30 mol% DMT) with an IV of 0.55 dl/g (60 wt. % phenol/40 wt. % dichlorobenzene) was delivered by another extruder at a rate of 65 pounds per hour. PEN was on the skin layers. The feedblock method was used to generate 151 layers which was passed through two multipliers producing an extrudate of 601 layers. U.S. Patent 3,565,985 describes similar coextrusion multipliers. All stretching was done in the tenter. The film was preheated to about 280°F in about 20 seconds and drawn in the transverse direction to a draw ratio of about 4.4 at a rate of about 6% per second. The film was then relaxed about 2% of its maximum width in a heat-set oven set at 460°F. The finished film thickness was 1.8 mil.

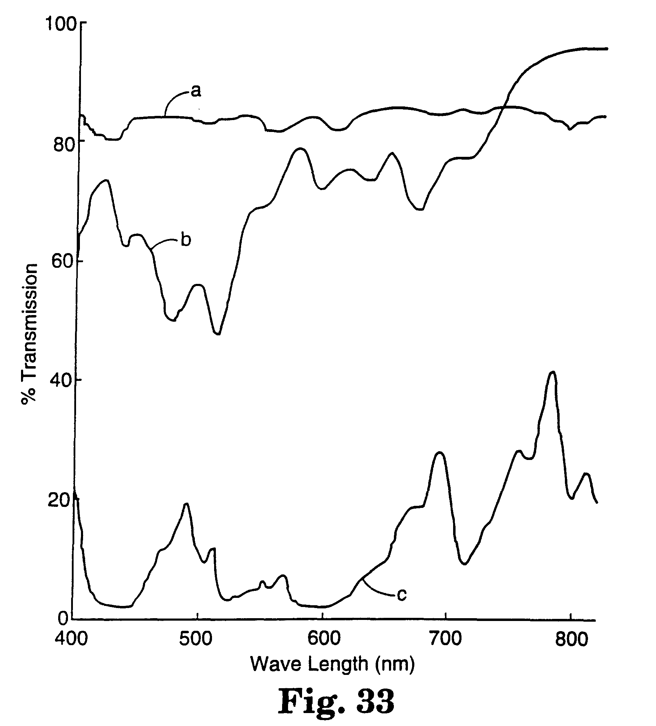

The transmission of the film is shown in Figure 33. Curve a shows transmission of p-polarized light at normal incidence, curve b shows transmission of p-polarized light at 60° incidence, and curve c shows transmission of s-polarized light at normal incidence. Note the nonuniform transmission of p-polarized light at both normal and 60° incidence. Also note the non-uniform extinction of s-polarized light in the visible range (400-700nm) shown by curve c.

**PET:CoPEN, 449**        A coextruded film containing 449 layers was made by extruding the cast web in one operation and later orienting the film in a laboratory film-stretching apparatus. Polyethylene Terephthalate (PET) with an Intrinsic Viscosity of 0.60 dl/g (60 wt. % phenol/40 wt. % dichlorobenzene) was delivered by one extruder at a rate of 26 pounds per hour and CoPEN (70 mol% 2,6 NDC and 30 mol% DMT) with an intrinsic viscosity of 0.53 (60 wt. % phenol/40 wt. % dichlorobenzene) was delivered by another extruder at a rate of 24 pounds per hour. PET was on the skin layers. The feedblock method was used to generate 57 layers which was passed through three multipliers producing an extrudate of 449 layers. U.S. Patent 3,565,985 describes similar coextrusion multipliers. The cast web was 7.5 mils thick and 12 inches wide. The web was later uniaxially oriented using a laboratory stretching device that uses a pantograph to grip a square section of film and stretch it in one direction while it is constrained in the other at a uniform rate. A 7.46 cm square of web was loaded into the stretcher at about 100°C and heated to 120°C in 60 seconds. Stretching then commenced at 10%/sec (based on original dimensions) until the sample was stretched to about 5.0x1. Immediately after the stretching the sample was cooled by blowing room temperature air at it. The finished film thickness was about 1.4 mil. This film had sufficient adhesion to survive the orientation process with no delamination.

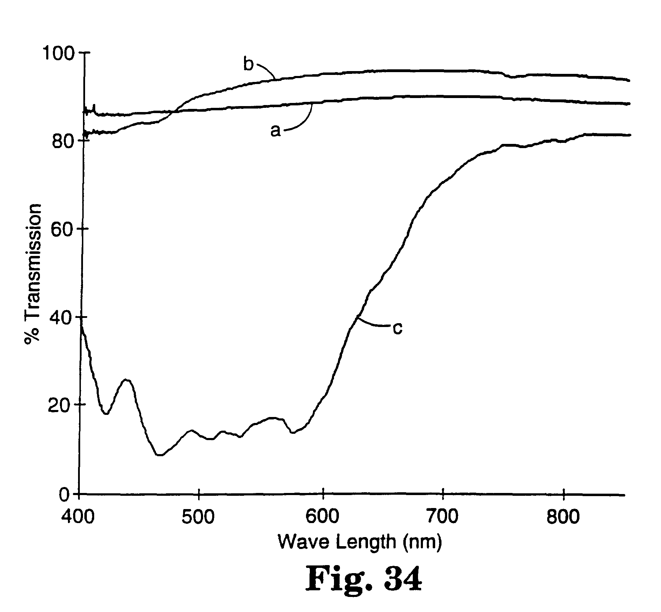

Figure 34 shows the transmission of this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (80-100%).

**PEN:coPEN, 601** A coextruded film containing 601 layers was made on a sequential flat-film-making line via a coextrusion process. Polyethylene naphthalate (PEN) with an intrinsic viscosity of 0.54 dl/g (60 wt % Phenol plus 40 wt % dichlorobenzene) was delivered by on extruder at a rate of 75 pounds per hour and the coPEN was delivered by another extruder at 65 pounds per hour. The coPEN was a copolymer of 70 mole % 2,6 naphthalene dicarboxylate methyl ester, 15 % dimethyl isophthalate and 15% dimethyl terephthalate with ethylene glycol. The feedblock method was used to generate 151 layers. The feedblock was designed to produce a gradient distribution of layers with a ration of thickness of the optical layers of 1.22 for the PEN and 1.22 for the coPEN. PEN skin layers were coextruded on the outside of the optical stack with a total thickness of 8% of the coextruded layers. The optical stack was multiplied by two sequential multipliers. The nominal multiplication ratio of the multipliers were 1.2 and 1.22, respectively. The film was subsequently preheated to 310°F in about 40 seconds and drawn in the transverse direction to a draw ratio of about 5.0 at a rate of 6% per second. The finished film thickness was about 2 mils.

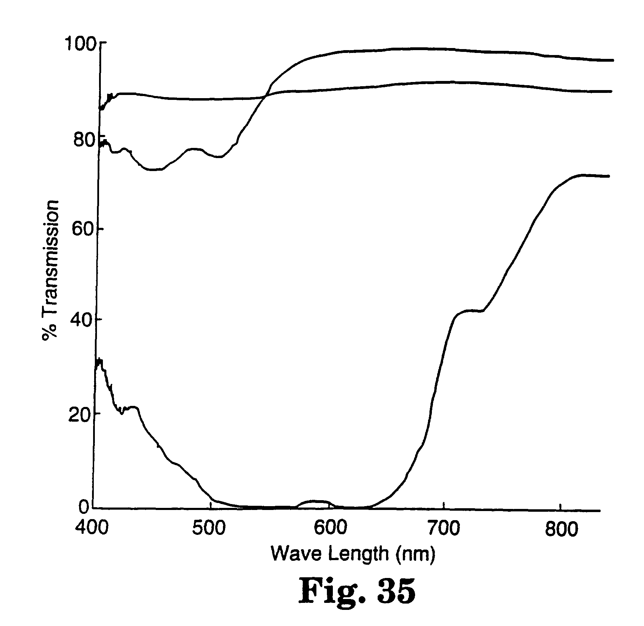

Figure 35 shows the transmission for this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (80-100%). Also note the very high extinction of s-polarized light in the visible range (400-700nm) shown by curve c. Extinction is nearly 100% between 500 and 650nm.

For those examples using the 57 layer feedblock, all layers were designed for only one optical thickness (1/4 of 550nm), but the extrusion equipment introduces deviations in the layer thicknesses throughout the stack resulting in a fairly broadband optical response. For examples made with the 151 layer feedblock, the feedblock is designed to create a distribution of layer thicknesses to cover a portion of the visible spectrum. Asymmetric multipliers were then used to broaden the distribution of layer thicknesses to cover most of the visible spectrum as described in U.S. Patents 5,094,788 and 5,094,793.

The above described principles and examples regarding the optical behavior of multilayer films can be applied to any of the display configurations shown in Figs. 1-3, 6, 9 - 11 or 13. In a display such as that shown in Figs. 1-3, where the reflective polarizer is located between an LCD panel and an optical cavity, a high color polarizer may be used. The high color polarizer does not uniformly transmit light at wide angles, which results in the nonuniform appearance and "color" off-axis. However, for those applications where a highly collimated beam is desirable, then, the off-axis performance of a high color reflective polarizer is less important.

Alternatively, in applications where a diffuser is located between the reflective polarizer and the LCD panel, a wide angle, low color polarizer is desirable. In this configuration, the diffuser will operate to randomize the direction of light incident upon it from the reflective polarizer. If the reflective polarizer were high color, then some of the off-axis color generated by the reflective polarizer would be re-directed toward the normal by the diffuser. This is highly undesirable as it would lead to a display with a nonuniform appearance at normal viewing angles. Thus, for a display in which a diffuser is located between the reflective polarizer and the LCD panel, a low color, wide angle polarizer is preferred.

Another advantage of a low color, wide angle polarizer in the displays shown in Figs. 1-3 is that the undesired polarization is reflected not only at normal angles of incidence, but also at very high off-axis angles. This allows even further randomization and recycling of light to occur, thus resulting in further brightness gains for the display system.

For the display configurations shown in Figs. 9 and 10, a brightness enhanced reflective polarizer is placed between the LCD panel and the optical cavity. In these configurations, a low color and wide angle reflective polarizer is preferred. This is due to the beam turning effect of the structured surface material. The effect can be described with respect to Fig. 7. For a brightness enhanced reflective polarizer, light first passes through the reflective polarizing element. Thus, a beam having a large off-axis angle, such as beam 236 in Fig. 7, will pass through the reflective polarizing element and impinge upon the smooth side of structured surface material 218. Fig. 7 shows that structured surface material 218 acts as a beam turning lens, redirecting beam 236 toward the normal as it exits the structured surface side of the material. A low color, wide angle reflective polarizer is therefore preferred for the brightness enhanced reflective polarizer because otherwise undesirable colored light is redirected toward the normal viewing angles of an observer. By using a wide angle, low color reflective polarizer, display uniformity at normal viewing angles is maintained.

The brightness enhanced reflective polarizer can thus benefit from the above discussion with respect to Figs. 23-25, and particularly Fig. 24, where off-axis color is reduced by introducing a Brewster effect at some angle away from the normal. As described above this is achieved by introducing a y-index mismatch between layers of the multilayered reflective polarizer, and reducing the z-index mismatch between layers. Thus, any desired combination of brightness enhanced reflective polarizer can be achieved by tuning the angle of the prisms of the structured surface material (given its respective optical behavior, such as shown in Figs. 7 and 8 for the 90° structured surface material), to the desired off-angle color performance tunable through introduction of a y-index mismatch and reduction of the z-index mismatch (since this behavior and can be tuned in accordance with the discussion shown and described above with respect to Figs. 23-25).

In a display configuration such as that shown in Fig. 11, the reflective polarizer is located between a structured surface brightness enhancement film and the LCD panel. In this configuration, the restraints on the reflective polarizer are not as restrictive in terms of high or low color. This is due to the beam turning effect of the structured surface material. Since the structured surface material directs light toward the normal and does not transmit light at very wide angles (see Fig. 8, for example) a low color, wide angle reflective polarizer is not necessarily required as the reflective polarizer will not see any wide angle light in this configuration. This effect is even more pronounced in the display of Fig. 13, where two crossed pieces of structured surface material are placed behind the reflective polarizer. This results in two-dimensional collimation of light incident on the reflective polarizer.

The invention has been described with respect to illustrative examples, to which various modifications may be made without departing from the scope of the present invention as defined by the appended claims.

**Claims**

1. An optical display comprising:

   a display module (15, 16, 17, 142, 143, 147);
   an optical cavity (24, 140) positioned to illuminate the display module, the optical cavity (24, 140) adapted to randomize polarization orientation of light incident upon a surface within the optical cavity (24, 140); and
   a reflective polarizer (12, 116) positioned between the display module and the optical cavity (24, 140), the reflective polarizer (12, 116) adapted to transmit light (42) from the optical cavity (24, 140) having a first polarization orientation toward the display module, and to reflect light (40) having a different polarization orientation toward the optical cavity (24, 140);

   wherein the reflective polarizer (12, 116) comprises a multiple layer stack of alternating layers of at least two different materials (102, 104), **characterized in that** refractive index difference between different material layers of said reflective polarizer in a first in-plane direction (25, 124) is greater than a refractive index difference between different material layers in a second in-plane direction (22, 122).

2. The optical display of claim 1 wherein at least some of the light (40) of the different polarization reflected toward the optical cavity (24, 140) is converted to the first polarization orientation by the optical cavity (24, 140).

3. The optical display of claim 2 wherein at least some of the converted light is transmitted by the reflective polarizer (12, 116) toward the display module (15, 16, 17, 142, 143, 147).

4. The optical display of claim 1 wherein the reflective polarizer (12, 116) further has an average transmission of at least 80% for light incident normal to the film for light having the first polarization orientation.

5. The optical display of claim 1 wherein the reflective polarizer (12, 116) further has an average transmission of at least 85% for light incident normal to the film for light having the first polarization orientation.

6. The optical display of claim 1 wherein the reflective polarizer (12, 116) further has an average transmission of at least 80% for light incident 60° from normal to the film for light having the first polarization orientation.

7. The optical display of claim 1 wherein the first material is a naphtalene dicarboxylic acid polyester.

8. The optical display of claim 7 wherein the first material is a poly(ethylene naphthalate).

9. The optical display of claim 8 wherein the second material is a copolyester comprising naphthalate and terephthalate units.

10. The optical display of claim 8 wherein the second material is a polystyrene.

11. The optical display of claim 1 wherein the reflective polarizer (12, 116) is planar.

12. The optical display of claim 1 wherein the multilayer stack is oriented in the first in-plane direction.

13. The optical display of claim 1 wherein the reflective polarizer (12, 116) has low off angle color.

14. The optical display of claim 1 further including a dichroic polarizer (18) positioned to antireflect a viewing side of the display module (15, 16, 17, 142, 143, 147).

15. The optical display of claim 14 wherein a transmission axis of the reflective polarizer (12, 116) is effectively aligned with a transmission axis of the dichroic polarizer (18).

16. The optical display of claim 1 wherein the optical cavity (24, 140) comprises an electroluminescent panel having a diffuse reflecting surface.

17. The optical display of claim 1 wherein the display further comprises a first structured surface material (113, 218) adapted such that light entering the first structured surface material (113, 218) within a first preselected group of angles to an axis perpendicular to said display module is reflected and light entering the first structured surface material (113, 218) within a second predetermined group of angles to the axis is refracted such that a majority of the light in the second group of angles forms an output wedge that is narrower than its associated input wedge, the angles in the second group of angles being greater than the angles in the first group of angles.

18. The optical display of claim 17 wherein at least some the reflected light having the different polarization orientation is converted to the first polarization orientation by the optical cavity (24, 140), and further wherein at least some of the light converted to the first polarization orientation is transmitted by the multilayer reflective polarizer (12, 116) toward the display module (15, 16, 17, 142, 143, 147).

19. The optical display of claim 18 wherein at least some of the reflected light within the first predetermined group of angles is converted to the second predetermined group of angles by the optical cavity (24, 140), and further wherein at least some of the light converted to the second predetermined group of angles is directed by the structured surface material toward the display module (15, 16, 17, 142, 143, 147).

20. The optical display of claim 17 wherein the first structured surface material (113, 218) has a smooth surface and a structured surface.

21. The optical display of claim 20 wherein the structured surface is toward the display module (15, 16, 17, 142, 143, 147).

22. The optical display of claim 20 wherein the structured surface comprises a plurality of triangular prisms (224).

23. The optical display of claim 22 wherein the plurality of triangular prisms (224) define an axis of orientation.

24. The optical display of claim 23 wherein the axis of orientation of the first structured surface material (113, 218) is aligned with the first in-plane direction of the reflective polarizer (12, 116).

25. The optical display of claim 22 wherein the triangular prisms (224) are isosceles triangular prisms.

26. The optical display of claim 22 wherein the triangular prisms (224) have included angles in the range of 70 degrees to 110 degrees.

27. The optical display of claim 26 wherein the triangular prisms (224) have included angles of about 90 degrees.

28. The optical display of claim 17 wherein the first structured surface material (113, 218) is positioned between the reflective polarizer (12, 116) and the display module (15, 16, 17, 142, 143, 147).

29. The optical display of claim 28 wherein the structured surface of the first structured surface material (113, 218) is toward the display module (15, 16, 17, 142, 143, 147).

30. The optical display of claim 17 wherein the first structured surface material (113, 218) is positioned between the reflective polarizer (12, 116) and the optical cavity (24, 140).

31. The optical display of claim 30 wherein the structured surface of the first structured surface material (113, 218) is toward the display module (15, 16, 17, 142, 143, 147).

32. The optical display of claim 17 wherein there is an air gap (171, 181) between the reflective polarizer (12, 116) and the first structured surface material (113, 218).

33. The optical display of claim 17 wherein the reflective polarizer (12, 116) and the first structured surface material (113, 218) form a unitary structure (110).

34. The optical display of claim 17 further including a second structured surface material (182).

35. The optical display of claim 34 wherein the second structured surface material (182) is adapted such that light entering the second structured surface material (182) within a third preselected group of angles to the axis is reflected and light entering the second structured surface material (182) within a fourth predetermined group of angles to the axis is refracted such that a majority of the light in the fourth group of angles forms an output wedge that is narrower than its associated input wedge, the angles in the fourth group of angles being greater than the angles in the third group of angles.

36. The optical display of claim 34 wherein the second structured surface material (182) further includes a smooth surface and a structured surface, wherein the structured surface of the second structured surface material (182) defines an associated axis of orientation.

37. The optical display of claim 36 wherein the first structured surface material (113, 218) has a smooth surface and a structured surface, wherein the structured surface of the first structured surface material (113, 218) defines an associated axis of orientation;
   wherein the axis of orientation of the first structured surface material (113, 218) is positioned with respect to the axis of orientation of the second structured surface material (182) to provide two dimensional control of light transmitted by the first and second structured surface materials.

38. The optical display of claim 37 wherein the axis of orientation of the first structured surface material (113, 218) is crossed with the axis of orientation of the second structured surface material.

39. The optical display of claim 38 wherein the angle is about 90 degrees.

40. The optical display of claim 38 wherein the angle is greater than 90 degrees.

41. The optical display of claim 37 wherein the structured surface of the second structured surface material (182) is positioned toward the smooth surface of the first structured surface material (113, 218).

42. The optical display of claim 41 wherein the structured surfaces of both the first and second structured surface materials are toward the display module (15, 16, 17, 142, 143, 147).

43. The optical display of claim 37 wherein the first and second structured surface materials are positioned between the reflective polarizer (12, 116) and the optical cavity (24, 140).

44. The optical display of claim 43 wherein the first and second structured surface materials are positioned between the reflective polarizer (12, 116) and the display module (15, 16, 17, 142, 143, 147).

**45.** The optical display of claim 34 wherein the first structured surface material (113, 218) is positioned between the reflective polarizer (12, 116) and the optical cavity (24, 140), and further wherein the second structured surface material (182) is positioned between the reflective polarizer (12, 116) and the display module (15, 16, 17, 142, 143, 147).

**Patentansprüche**

**1.** Optisches Display mit:

einem Displaymodul (15, 16, 17, 142, 143, 147);
einem optischen Hohlraum (24, 140), der zur Beleuchtung des Displaymoduls angeordnet ist, wobei der optische Hohlraum (24, 140) dazu geeignet ist, die Polarisationsrichtung von auf eine Oberfläche im Inneren des optischen Hohlraums (24, 140) auftreffendem Licht zu randomisieren;
einem zwischen dem Displaymodul und dem optischen Hohlraum (24, 140) angeordneten reflektiven Polarisator (12, 116), wobei der reflektive Polarisator (12, 116) dazu geeignet ist, Licht (42) mit einer ersten Polarisationsrichtung vom optischen Hohlraum (24, 140) zum Displaymodul hin durchzulassen und Licht (40) mit einer anderen Polarisationsrichtung zum optischen Hohlraum (24, 140) hin zu reflektieren;

wobei der reflektive Polarisator (12, 116) eine mehrschichtige Struktur aus alternierenden Schichten mindestens zweier verschiedener Materialien (102, 104) aufweist;
**dadurch gekennzeichnet, daß**
ein Brechungsindexunterschied zwischen verschiedenen Materialschichten des reflektiven Polarisators in einer ersten In-Ebenen-Richtung (25, 124) größer ist als ein Brechungsindexunterschied zwischen verschiedenen Materialschichten in einer zweiten In-Ebenen-Richtung (22, 122).

**2.** Optisches Display nach Anspruch 1, wobei mindestens ein Teil des zum optischen Hohlraum (24, 140) hin reflektierten Lichts (40) mit der anderen Polarisation durch den optischen Hohlraum (24, 140) in Licht mit der ersten Polarisationsrichtung umgewandelt wird.

**3.** Optisches Display nach Anspruch 2, wobei mindestens ein Teil des umgewandelten Lichts durch den reflektiven Polarisator (12, 116) zum Displaymodul (15, 16, 17, 142, 143, 147) hin durchgelassen wird.

**4.** Optisches Display nach Anspruch 1, wobei der reflektive Polarisator (12, 116) ferner für normal zum Film auftreffendes Licht mit der ersten Polarisationsrichtung einen mittleren Lichtdurchlaßgrad von mindestens 80% aufweist.

**5.** Optisches Display nach Anspruch 1, wobei der reflektive Polarisator (12, 116) ferner für normal zum Film auftreffendes Licht mit der ersten Polarisationsrichtung einen mittleren Lichtdurchlaßgrad von mindestens 85% aufweist.

**6.** Optisches Display nach Anspruch 1, wobei der reflektive Polarisator (12, 116) ferner für unter 60° bezüglich der Normalen zum Film auftreffendes Licht mit der ersten Polarisationsrichtung einen mittleren Lichtdurchlaßgrad von mindestens 80% aufweist.

**7.** Optisches Display nach Anspruch 1, wobei das erste Material ein Naphthalendikarbonsäurepolyester ist.

**8.** Optisches Display nach Anspruch 7, wobei das erste Material ein Poly(ethylennaphthalat) ist.

**9.** Optisches Display nach Anspruch 8, wobei das zweite Material ein Copolyester ist, das Naphthalat- und Terephthalateinheiten aufweist.

**10.** Optisches Display nach Anspruch 8, wobei das zweite Material ein Polystyrol ist.

**11.** Optisches Display nach Anspruch 1, wobei der reflektive Polarisator (12, 116) planar ist.

**12.** Optisches Display nach Anspruch 1, wobei die mehrschichtige Struktur in der ersten In-Ebenen-Richtung ausgerichtet ist.

**13.** Optisches Display nach Anspruch 1, wobei der reflektive Polarisator (12, 116) einen geringen off-angle-Farbgrad aufweist.

14. Optisches Display nach Anspruch 1, ferner mit einem dichroitischen Polarisator (18), der so angeordnet ist, daß eine Betrachtungsseite des Displaymoduls (15, 16, 17, 142, 143, 147) antireflektierend ist.

15. Optisches Display nach Anspruch 14, wobei eine Durchlaßachse des reflektiven Polarisators (12, 116) mit einer Durchlaßachse des dichroitischen Polarisators (18) effektiv ausgerichtet ist.

16. Optisches Display nach Anspruch 1, wobei der optische Hohlraum (24, 140) eine Elektrolumineszenzplatte mit einer diffus reflektierenden Oberfläche aufweist.

17. Optisches Display nach Anspruch 1, wobei das Display ferner ein erstes strukturiertes Oberflächenmaterial (113, 218) aufweist, das dazu geeignet ist, innerhalb einer ersten vorgegebenen Gruppe von Winkeln bezüglich einer senkrecht zum Displaymodul angeordneten Achse auf das erste strukturierte Oberflächenmaterial (113, 218) auftreffendes Licht zu reflektieren und innerhalb einer zweiten vorgegebenen Gruppe von Winkeln bezüglich der Achse auf das erste strukturierte Oberflächenmaterial (113, 218) auftreffendes Licht so zu brechen, daß ein Hauptteil des Lichts der zweiten Winkelgruppe einen Ausgangskeil bildet, der schmaler ist als sein zugeordneter Eingangskeil, wobei die Winkel der zweiten Winkelgruppe größer sind als die Winkel der ersten Winkelgruppe.

18. Optisches Display nach Anspruch 17, wobei mindestens ein Teil des reflektierten Lichts mit der anderen Polarisationsrichtung durch den optischen Hohlraum (24, 140) in Licht mit der ersten Polarisationsrichtung umgewandelt wird, und wobei ferner mindestens ein Teil des in Licht mit der ersten Polarisationsrichtung umgewandelten Lichts durch den mehrschichtigen reflektiven Polarisator (12, 116) zum Displaymodul (15, 16, 17, 142, 143, 147) hin durchgelassen wird.

19. Optisches Display nach Anspruch 18, wobei mindestens ein Teil des reflektierten Lichts innerhalb der ersten vorgegebenen Winkelgruppe durch den optischen Hohlraum (24, 140) in Licht der zweiten vorgegebenen Winkelgruppe umgewandelt wird, und wobei ferner mindestens ein Teil des in Licht der zweiten vorgegebenen Winkelgruppe umgewandelten Lichts durch das strukturierte Oberflächenmaterial zum Displaymodul (15, 16, 17, 142, 143, 147) hin gelenkt wird.

20. Optisches Display nach Anspruch 17, wobei das erste strukturierte Oberflächenmaterial (113, 218) eine glatte Oberfläche und eine strukturierte Oberfläche aufweist.

21. Optisches Display nach Anspruch 20, wobei die strukturierte Oberfläche dem Displaymodul (15, 16, 17, 142, 143, 147) zugewandt angeordnet ist.

22. Optisches Display nach Anspruch 20, wobei die strukturierte Oberfläche mehrere dreieckige Prismen (224) aufweist.

23. Optisches Display nach Anspruch 22, wobei die mehreren dreieckigen Prismen (224) eine Ausrichtungsachse definieren.

24. Optisches Display nach Anspruch 23, wobei die Ausrichtungsachse des ersten strukturierten Oberflächenmaterials (113, 218) mit der ersten In-Ebenen-Richtung des reflektiven Polarisators (12, 116) ausgerichtet ist.

25. Optisches Display nach Anspruch 22, wobei die dreieckigen Prismen (224) gleichschenklige dreieckige Prismen sind.

26. Optisches Display nach Anspruch 22, wobei die dreieckigen Prismen (224) eingeschlossene Winkel im Bereich von 70° bis 110° aufweisen.

27. Optisches Display nach Anspruch 26, wobei die dreieckigen Prismen (224) eingeschlossene Winkel von etwa 90° aufweisen.

28. Optisches Display nach Anspruch 17, wobei das erste strukturierte Oberflächenmaterial (113, 218) zwischen dem reflektiven Polarisator (12, 116) und dem Displaymodul (15, 16, 17, 142, 143, 147) angeordnet ist.

**29.** Optisches Display nach Anspruch 28, wobei die strukturierte Oberfläche des ersten strukturierten Oberflächenmaterials (113, 218) dem Displaymodul (15, 16, 17, 142, 143, 147) zugewandt angeordnet ist.

**30.** Optisches Display nach Anspruch 17, wobei das erste strukturierte Oberflächenmaterial (113, 218) zwischen dem reflektiven Polarisator (12, 116) und dem optischen Hohlraum (24, 140) angeordnet ist.

**31.** Optisches Display nach Anspruch 30, wobei die strukturierte Oberfläche des ersten strukturierten Oberflächenmaterials (113, 218) dem Displaymodul (15, 16, 17, 142, 143, 147) zugewandt angeordnet ist.

**32.** Optisches Display nach Anspruch 17, wobei ein Luftzwischenraum (171, 181) zwischen dem reflektiven Polarisator (12, 116) und dem ersten strukturierten Oberflächenmaterial (113, 218) vorhanden ist.

**33.** Optisches Display nach Anspruch 17, wobei der reflektive Polarisator (12, 116) und das erste strukturierte Oberflächenmaterial (113, 218) eine einheitliche Struktur (110) bilden.

**34.** Optisches Display nach Anspruch 17, ferner mit einem zweiten strukturierten Oberflächenmaterial (182).

**35.** Optisches Display nach Anspruch 34, wobei das zweite strukturierte Oberflächenmaterial (182) dazu geeignet ist, innerhalb einer dritten vorgegebenen Gruppe von Winkeln bezüglich der Achse auf das zweite strukturierte Oberflächenmaterial (182) auftreffendes Licht zu reflektieren und innerhalb einer vierten vorgegebenen Gruppe von Winkeln bezüglich der Achse auf das zweite strukturierte Oberflächenmaterial (182) auftreffendes Licht so zu brechen, daß ein Hauptteil des Lichts der vierten Winkelgruppe einen Ausgangskeil bildet, der schmaler ist als sein zugeordneter Eingangskeil, wobei die Winkel der vierten Winkelgruppe größer sind als die Winkel der dritten Winkelgruppe.

**36.** Optisches Display nach Anspruch 34, wobei das zweite strukturierte Oberflächenmaterial (182) ferner eine glatte Oberfläche und eine strukturierte Oberfläche aufweist, wobei die strukturierte Oberfläche des zweiten strukturierten Oberflächenmaterials eine zugeordnete Ausrichtungsachse definiert.

**37.** Optisches Display nach Anspruch 36, wobei das erste strukturierte Oberflächenmaterial (113, 218) eine glatte Oberfläche und eine strukturierte Oberfläche aufweist, wobei die strukturierte Oberfläche des ersten strukturierten Oberflächenmaterials (113, 218) eine zugeordnete Ausrichtungsachse definiert; und
wobei die Ausrichtungsachse des ersten strukturierten Oberflächenmaterials (113, 218) bezüglich der Ausrichtungsachse des zweiten strukturierten Oberflächenmaterials (182) so angeordnet ist, daß eine zweidimensionale Steuerung von durch das erste und das zweite strukturierte Oberflächenmaterial durchgelassenem Licht bereitgestellt wird.

**38.** Optisches Display nach Anspruch 37, wobei die Ausrichtungsachse des ersten strukturierten Oberflächenmaterials (113, 218) die Ausrichtungsachse des zweiten strukturierten Oberflächenmaterials schneidet.

**39.** Optisches Display nach Anspruch 38, wobei der Schnittwinkel etwa 90° beträgt.

**40.** Optisches Display nach Anspruch 38, wobei der Schnittwinkel größer ist als 90°.

**41.** Optisches Display nach Anspruch 37, wobei die strukturierte Oberfläche des zweiten strukturierten Oberflächenmaterials (182) der glatten Oberfläche des ersten strukturierten Oberflächenmaterials (113, 218) zugewandt angeordnet ist.

**42.** Optisches Display nach Anspruch 41, wobei die strukturierten Oberflächen sowohl des ersten als auch des zweiten strukturierten Oberflächenmaterials zum Displaymodul (15, 16, 17, 142, 143, 147) zugewandt angeordnet sind.

**43.** Optisches Display nach Anspruch 37, wobei das erste und das zweite strukturierte Oberflächenmaterial zwischen dem reflektiven Polarisator (12, 116) und dem optischen Hohlraum (24, 140) angeordnet sind.

**44.** Optisches Display nach Anspruch 43, wobei das erste und das zweite strukturierte Oberflächenmaterial zwischen dem reflektiven Polarisator (12, 116) und dem Displaymodul (15, 16, 17, 142, 143, 147) angeordnet sind.

**45.** Optisches Display nach Anspruch 34, wobei das erste strukturierte Oberflächenmaterial (113, 218) zwischen dem reflektiven Polarisator (12, 116) und dem optischen Hohlraum (24, 140) angeordnet ist, und wobei ferner das zweite strukturierte Oberflächenmaterial (182) zwischen dem reflektiven Polarisator (12, 116) und dem Displaymodul (15, 16, 17, 142, 143, 147) angeordnet ist.

**Revendications**

1. Un affichage optique qui comprend:

   un module d'affichage (15, 16, 17, 142, 143, 147);
   une cavité optique (24, 140) positionnée pour éclairer le module d'affichage, la cavité optique (24, 140) étant apte à rendre aléatoire une orientation de polarisation d'une lumière incidente sur une surface à l'intérieur de la cavité optique (24, 140); et
   un polariseur réflecteur (12, 116) positionné entre le module d'affichage et la cavité optique (24, 140), le polariseur réflecteur (12, 116) étant apte à transmettre vers le module d'affichage une lumière (42) d'une première orientation de polarisation provenant de la cavité optique (24, 140) et à réfléchir vers la cavité optique (24, 140) une lumière (40) à orientation différente de polarisation;

   dans lequel le polariseur réflecteur (12, 116) comprend une pile de couches multiples formée de couches alternées d'au moins deux matières différentes (102, 104), **caractérisé en ce qu'**une différence entre les indices de réfraction des différentes couches de matière dudit polariseur réflecteur dans une première direction (25, 124) dans le plan est plus grande qu'une différence entre les indices de réfraction des couches des matières différentes dans une deuxième direction (22, 122) dans le plan.

2. L'affichage optique selon la revendication 1 dans lequel au moins une partie de la lumière (40) de la polarisation différente réfléchie vers la cavité optique (24, 140) est convertie par la cavité optique (24, 140) à la première orientation de polarisation.

3. L'affichage optique selon la revendication 2, dans lequel au moins une partie de la lumière convertie est transmise par le polariseur réflecteur (12, 116) vers le module d'affichage (15, 16, 17, 142, 143, 147).

4. L'affichage optique selon la revendication 1 dans lequel le pourcentage moyen de transmission du polariseur réflecteur (12, 116) est en outre d'au moins 80% pour une lumière d'incidence normale sur le film pour une lumière de la première orientation de polarisation.

5. L'affichage optique selon la revendication 1, dans lequel le pourcentage moyen de transmission du polariseur réflecteur (12, 116) est en outre d'au moins 85% pour une lumière d'incidence normale sur le film pour une lumière de la première orientation de polarisation.

6. L'affichage optique selon la revendication 1 dans lequel le pourcentage moyen de transmission du polariseur (12, 116) est d'au moins 80% pour une lumière incidente sur le film à 60° par rapport à la normale pour une lumière de la première orientation de polarisation.

7. L'affichage optique selon la revendication 1 dans lequel la première matière est un polyester de l'acide naphtalène dicarboxydique.

8. L'affichage optique selon la revendication 7 dans lequel la première matière est un polynaphtalate d'éthylène.

9. L'affichage optique selon la revendication 8 dans lequel la deuxième matière est un copolyester comprenant des unités de naphtalate et de téréphtalate.

10. L'affichage optique selon la revendication 8 dans lequel la deuxième matière est un polystyrène.

11. L'affichage optique selon la revendication 1 dans lequel le polariseur réflecteur (12, 116) est plan.

12. L'affichage optique selon la revendication 1 dans lequel la pile de couches multiples est orientée dans la première direction dans le plan.

**13.** L'affichage optique selon la revendication 1 dans lequel la couleur hors angle du polariseur réflecteur (12, 116) est faible.

**14.** L'affichage optique selon la revendication 1 qui inclut en outre un polariseur dichroïque (18) positionné pour servir de couche anti-reflet sur un côté de visualisation du module d'affichage (15, 16, 17, 142, 143, 147).

**15.** L'affichage optique selon la revendication 14, dans lequel un axe de transmission du polariseur réflecteur (12, 116) est effectivement aligné avec un axe de transmission du polariseur dichroïque (18).

**16.** L'affichage optique selon la revendication 1 dans lequel la cavité optique (24, 140) comprend un panneau électroluminescent à surface à réflexion diffuse.

**17.** L'affichage optique selon la revendication 1 dans lequel l'affichage comprend en outre une première matière (113, 218) à surface structurée telle qu'une lumière entrant dans la première matière (113, 218) à surface structurée à l'intérieur d'un premier groupe présélectionné d'angles par rapport à l'axe perpendiculaire audit module d'affichage est réfléchie et qu'une lumière entrant dans la première matière (113, 218) à surface structurée à l'intérieur d'un deuxième groupe prédéterminé d'angles par rapport à l'axe est réfractée d'une manière telle qu'une majorité de la lumière dans le deuxième groupe d'angles forme une plage angulaire de sortie qui est plus étroite que sa plage angulaire d'entrée associée, les angles du deuxième groupe d'angles étant plus grands que les angles du premier groupe d'angles.

**18.** L'affichage optique selon la revendication 17 dans lequel au moins une partie de la lumière réfléchie à orientation différente de polarisation est convertie par la cavité optique (24, 140) à la première orientation de polarisation, et dans lequel en outre au moins une partie de la lumière convertie à la première orientation de polarisation est transmise par le polariseur réflecteur (12, 116) à couches multiples vers le module d'affichage (15, 16, 17, 142, 143, 147).

**19.** L'affichage optique selon la revendication 18 dans lequel au moins une partie de la lumière réfléchie à l'intérieur du premier groupe prédéterminé d'angles est convertie par la cavité optique (24, 140) au deuxième groupe prédéterminé d'angle, et dans lequel en outre au moins une partie de la lumière convertie au deuxième groupe prédéterminé d'angles est dirigée par la matière à surface structurée vers le module d'affichage (15, 16, 17, 142, 143, 147).

**20.** L'affichage optique selon la revendication 17 dans lequel la première matière (113, 218) à surface structurée comporte une surface lisse et une surface structurée.

**21.** L'affichage optique selon la revendication 20 dans lequel la surface structurée est tournée vers le module d'affichage (15, 16, 17, 142, 143, 147).

**22.** L'affichage optique selon la revendication 20 dans lequel la surface structurée comprend une série de prismes triangulaires (224).

**23.** L'affichage optique selon la revendication 22 dans lequel la série de prismes triangulaires (224) définit un axe d'orientation.

**24.** L'affichage optique selon la revendication 23 dans lequel l'axe d'orientation de la première matière (113, 218) à surface structurée est alignée avec la première direction, dans le plan, du polariseur réflecteur (12, 116).

**25.** L'affichage optique selon la revendication 22 dans lequel les prismes triangulaires (224) sont des prismes triangulaires isocèles.

**26.** L'affichage optique selon la revendication 22 dans lequel les angles inclus des prismes triangulaires (224) sont dans la plage de 70° à 110°.

**27.** L'affichage optique selon la revendication 26 dans lequel les angles inclus des prismes triangulaires (224) sont d'environ 90°.

**28.** L'affichage optique selon la revendication 17 dans lequel la première matière (113, 218) à surface structurée est positionnée entre le polariseur réflecteur (12, 116) et le module d'affichage (15, 16, 17, 142, 143, 147).

29. L'affichage optique selon la revendication 28 dans lequel la surface structurée de la première matière (113, 218) à surface structurée est tournée ver le module d'affichage (15, 16, 17, 142, 143, 147).

30. L'affichage optique selon la revendication 17 dans lequel la première matière (113, 218) à surface structurée est positionnée entre le polariseur réflecteur (12, 116) et la cavité optique (24, 140).

31. L'affichage optique selon la revendication 30 dans lequel la surface structurée de la première matière (113, 218) à surface structurée est tournée vers le module d'affichage (15, 16, 17, 142, 143, 147).

32. L'affichage optique selon la revendication 17 dans lequel un intervalle d'air (171, 181) est ménagé entre le polariseur réflecteur (12, 116) et la première matière (113, 218) à surface structurée.

33. L'affichage optique selon la revendication 17 dans lequel le polariseur réflecteur (12, 116) et la première matière (113, 218) à surface structurée forment une structure d'un seul tenant (110).

34. L'affichage optique selon la revendication 17 qui inclut en outre une deuxième matière (182) à surface structurée.

35. L'affichage optique selon la revendication 34 dans lequel la deuxième matière (182) à surface structurée est telle qu'une lumière entrant dans la deuxième matière (182) à surface structurée à l'intérieur d'un troisième groupe présélectionné d'angles par rapport à l'axe est réfléchie et qu'une lumière entrant dans la deuxième matière (182) à surface structurée à l'intérieur d'un quatrième groupe prédéterminé d'angles par rapport à l'axe est réfractée d'une manière telle qu'une majorité de la lumière dans le quatrième groupe d'angles forme une plage angulaire de sortie qui est plus étroite que sa plage angulaire d'entrée associée, les angles du quatrième groupe d'angles étant plus grands que les angles du troisième groupe d'angles.

36. L'affichage optique selon la revendication 34 dans lequel la deuxième matière (182) à surface structurée inclut en outre une surface lisse et une surface structurée, la surface structurée de la deuxième matière (182) à surface structurée définissant un axe associé d'orientation.

37. L'affichage optique selon la revendication 36, dans lequel la première matière (113, 218) à surface structure comporte une surface lisse et une surface structurée, la surface structurée de la première matière (113, 218) à surface structurée définissant un axe associé d'orientation;
dans lequel l'axe d'orientation de la première matière (113, 218) à surface structurée est positionné par rapport à l'axe d'orientation de la deuxième matière (182) à surface structurée de façon à réaliser un réglage bidimensionnel de lumière transmise par la première et la deuxième matières à surfaces structurées.

38. L'affichage optique selon la revendication 37 dans lequel l'axe d'orientation de la première matière (113, 218) à surface structurée croise l'axe d'orientation de la deuxième matière à surface structurée.

39. L'affichage optique selon la revendication 38 dans lequel l'angle est d'environ 90°.

40. L'affichage optique selon la revendication 38 dans lequel l'angle est supérieur à 90°.

41. L'affichage optique selon la revendication 37 dans lequel la surface structurée de la deuxième matière (182) à surface structurée est positionné vers la surface lisse de la première matière (113, 218) à surface structurée.

42. L'affichage optique selon la revendication 41 dans lequel les surfaces structurées de la première et de la deuxième matières à surfaces structurées sont toutes deux tournées vers le module d'affichage (15, 16, 17, 142, 143, 147).

43. L'affichage optique selon la revendication 37 dans lequel la première et la deuxième matières à surfaces structurées sont positionnées entre le polariseur réflecteur (12, 116) et la cavité optique (24, 140).

44. L'affichage optique selon la revendication 43 dans lequel la première et la deuxième matières à surfaces structurées sont positionnées entre le polariseur réflecteur (12, 116) et le module d'affichage le module d'affichage (15, 16, 17, 142, 143, 147).

**45.** L'affichage optique selon la revendication 34 dans lequel la première matière (113, 218) à surface structurée est positionnée entre le polariseur réflecteur (12, 116) et la cavité optique (24, 140), et dans lequel en outre la deuxième matière (182) à surface structurée est positionnée entre le polariseur réflecteur (12, 116) et le module d'affichage (15, 16, 17, 142, 143, 147).

**Fig. 1**

**Fig. 2**

**Fig. 3**

**Fig. 4**

**Fig. 5**

**Fig. 6**

**Fig. 7**

REFLECTED
230

226

228

0°

TRANSMITTED
232

TRANSMITTED
234

9.4°          9.4°

## Fig. 8

146

152 (a,c)

163(a)

164

42

150

160(a)

161(a)

110

148
(a,b,c,d)

154 (a,b,c,d)

140

156 (b,c,d)          157 (a,b,c,d)          **Fig. 9**

**Fig. 10**

**Fig. 11**

**Fig. 12**

**Fig. 13**

**Fig. 14**

**Fig. 15**

**Fig. 16**

**Fig. 17**

**Fig. 18**

**Fig. 19**

**Fig. 20**

**Fig. 21**

**Fig. 22**

**Fig. 23**

Fig. 24

Fig. 25

Fig. 26

Fig. 27

Fig. 28

**Fig. 29**

**Fig. 30**

Fig. 31

Fig. 32

**Fig. 33**

Fig. 34

Fig. 35